# EUROPEAN PATENT APPLICATION

(11) **EP 3 777 765 A1**
(43) Date of publication of application: **17.02.2021**
(21) Application number: 19785037.3
(22) Date of filing: 26.03.2019
(51) Int. Cl.: A61C 17/22

(54) **SMART TOOTHBRUSH CONTROL CIRCUIT, SMART TOOTHBRUSH, AND TOOTH-BRUSHING BEHAVIOR MONITORING METHOD**

(30) Priority: 13.04.2018 CN 201810330750
(71) Applicant: Shenzhen Lebond Technology Co., Ltd., Shenzhen, Guangdong 518000 (CN)
(72) Inventor: HUANG, Bazi, Shenzhen, Guangdong 518000 (CN); HUANG, Daochen, Shenzhen, Guangdong 518000 (CN); LU, Haixiong, Shenzhen, Guangdong 518000 (CN)
(74) Representative: Häckel, Stefan
(86) International application number: PCT/CN2019/079755
(87) International publication number: WO 2019/196644

(57) **Abstract**

A smart toothbrush control circuit, a smart toothbrush, and a smart tooth-brushing behavior monitoring method. The control circuit (10) comprises: a main control module (101), a brush head module (102), a position detection module (103), and a pressure detection module (104). The main control module (101) is connected to a cloud server (30) by means of a smart terminal (20). The main control module (101) uploads oral data to the cloud server (30) so as to implement deep-level data analysis and processing on the oral data. The main control module (101) generates a control signal according to the oral data, and the brush head module (102), the position detection module (103) and the pressure detection module (104) send a variety of behavior guidance and prompts to a user on the basis of the control signal. The smart terminal (20) can synchronously display the tooth-brushing behavior of the user on the basis of the control signal, so as to fully ensure the oral health of the user during the tooth-brushing process, thereby solving the problems of smart toothbrushes failing to provide deep analysis and processing of tooth-brushing data and the user's intelligent experience being poor.

## Description

### Technical Field

The present disclosure belongs to the technical field of smart toothbrushes, and in particular, relates to a control circuit of a smart toothbrush, a smart toothbrush and a smart monitoring method of tooth-brushing behavior.

### Background Art

With the increase of people's health consciousness and consumption level, the dental health gradually becomes the focus of people's attention; daily tooth-brushing behaviors have extremely important effects on protecting the health of teeth and monitoring the oral health of the human body, but the conventional common toothbrush can only be used for cleaning teeth, while cannot monitor the tooth-brushing behaviors of a user in real time, or record the oral information of the user; under such condition, as a high-tech toothbrush, the smart toothbrush is gradually widely used; compared with the conventional common toothbrush, the smart toothbrush can analyze the tooth-brushing behavior and habit of the user, record the oral information of the user and monitor the oral health condition of the user in real time.

However, in the prior art, the smart toothbrush only simply collects data generated by the user in the tooth-brushing process, on the one hand, the tooth-brushing data results detected by a control circuit therein have a large error, and the control circuit of the existing smart toothbrush cannot intuitively display the tooth-brushing data results of the user; and on the other hand, the control circuit of the existing smart toothbrush does not analyze or process the tooth-brushing data in depth, so that the oral health state of the user cannot be accurately analyzed, and thus the real intelligent experience of the user is reduced.

### Summary

The present disclosure provides a control circuit of a smart toothbrush, a smart toothbrush and a smart monitoring method of tooth-brushing behavior, aiming at solving the problems existing in the prior art that the control circuit of the smart toothbrush lacks in-depth analysis and processing on the tooth-brushing data and that the intelligent experience of the user is relatively low.

In a first aspect, the present disclosure provides a control circuit of a smart toothbrush, including:
a main control module, connected to a cloud server through a smart terminal, and configured to obtain oral data of a user by gathering a brush head type, tooth-brushing posture data and tooth-brushing pressure data and upload the oral data to the cloud server through the smart terminal, and generate a control signal according to the oral data;
a brush head module, connected to the main control module, and configured to detect type characteristic of a brush head selected by the user to obtain the brush head type, and generate a control signal according to the oral data;
a position detection module, connected to the main control module, and configured to detect a tooth-brushing posture of the user to obtain the tooth-brushing posture data, and obtain a tooth-brushing posture guide signal according to the control signal; and
a pressure detection module, connected to the main control module, and configured to detect a tooth-brushing pressure of the user to obtain the tooth-brushing pressure data, and obtain a pressure detection signal according to the control signal.

In one of the embodiments, the main control module includes:
a charging unit, configured to access a power supply signal;
a voltage stabilizing unit, connected to the charging unit, and configured to obtain a voltage stabilizing signal according to the power supply signal;
a main control unit, connected to the charging unit and the voltage stabilizing unit, and configured to obtain the oral data of the user by gathering the brush head type, the tooth-brushing posture data and the tooth-brushing pressure data, and generate the control signal according to the oral data; and
a communication unit, connected between the main control unit and the cloud server, and configured to upload the oral data to the cloud server through the smart terminal.

In one of the embodiments, the charging unit includes: a first inductor, a first capacitor, a second capacitor, a third capacitor, a fourth capacitor, a fifth capacitor, a first diode, a second diode, a third diode, a fourth diode, a fifth diode, a sixth diode, a first resistor, a second resistor, a third resistor, a fourth resistor, a fifth resistor, a sixth resistor, a seventh resistor, a first PMOS transistor, a first NPN-type triode, a battery and a fuse, wherein
a first end of the first inductor, a first end of the first capacitor, a first end of the second capacitor and a cathode of the second diode are collectively connected to an anode of the first diode, a second end of the first inductor, a second end of the first capacitor, a second end of the second capacitor and a cathode of the third diode are collectively connected to an anode of the fourth diode, an anode of the second diode and an anode of the third diode are collectively connected to the ground, a cathode of the first diode, an anode of the fifth diode, a cathode of the fourth diode and an anode of the sixth diode are collectively connected to a first end of the sixth resistor, a second end of the sixth resistor, a first end of the fourth capacitor, a first end of the fifth capacitor and a first end of the seventh resistor are collectively connected to the main control unit, a second end of the fourth capacitor, a second end of the fifth capacitor and a second end of the seventh resistor are collectively connected to the ground, a cathode of the sixth diode is connected to a first end of the fifth resistor, a cathode of the fifth diode and a first end of the first resistor are collectively connected to a source electrode of the first PMOS transistor, a first end of the second resistor is connected to a gate electrode of the first PMOS transistor, a second end of the first resistor and a second end of the second resistor are collectively connected to a collector of the first NPN-type triode, an emitter of the first NPN-type triode is connected to the ground, a drain electrode of the first PMOS transistor, a first end of the third capacitor, a first end of the fuse and a first end of the third resistor are collectively connected to the main control unit, a second end of the third resistor is connected to the voltage stabilizing unit, a second end of the fuse is connected to a positive electrode of the battery, a negative electrode of the battery is connected to the ground, a second end of the third capacitor is connected to the ground, a base of the first NPN-type triode is connected to a first end of the fourth resistor, and a second end of the fourth resistor and a second end of the fifth resistor are collectively connected to the main control unit.

In one of the embodiments, the voltage stabilizing unit includes: a seventh diode, a sixth capacitor, a seventh capacitor and a voltage stabilizing chip, wherein
a cathode of the seventh diode and a power supply signal input pin of the voltage stabilizing chip are collectively connected to the charging unit, a voltage stabilizing signal output pin of the voltage stabilizing chip, a first end of the sixth capacitor and a first end of the seventh capacitor are collectively connected to the main control unit, a second end of the seventh capacitor is connected to the ground, a second end of the sixth capacitor, a grounding pin of the voltage stabilizing chip and an anode of the seventh diode are collectively connected to the ground.

In one of the embodiments, the main control unit includes a main control chip, wherein
a power supply pin of the main control chip is connected to the voltage stabilizing unit, a power supply control pin of the main control chip is connected to the charging unit, and a communication pin of the main control chip is connected to the communication unit.

In one of the embodiments, the brush head module includes a processing chip, wherein
a serial communication pin of the processing chip is connected to the main control module.

In one of the embodiments, the pressure detection module includes: an eighth resistor, a ninth resistor, a tenth resistor, an eleventh resistor, a twelfth resistor, a thirteenth resistor, a fourteenth resistor, a fifteenth resistor, a sixteenth resistor and an operational amplifier, wherein
a first end of the eighth resistor and a first end of the ninth resistor are collectively connected to the ground, a second end of the ninth resistor and a first end of the tenth resistor are collectively connected to a non-inverting input terminal of the operational amplifier, a second end of the ninth resistor, a first end of the eleventh resistor and a first end of the twelfth resistor are collectively connected to an inverting input terminal of the operational amplifier, a second end of the tenth resistor, a second end of the eleventh resistor and a first end of the thirteenth resistor are collectively connected to the main control module, a second end of the twelfth resistor and a second end of the thirteenth resistor are collectively connected to a first end of the fourteenth resistor, a second end of the fourteenth resistor is connected to the ground, a first end of the fifteenth resistor and a first end of the sixteenth resistor are collectively connected to the inverting input terminal of the operational amplifier, a second end of the fifteenth resistor is connected to the ground, and a second end of the sixteenth resistor and an output terminal of the operational amplifier are collectively connected to the main control module.

In one of the embodiments, the control circuit further includes:
a motor driving module, connected to the main control module, and configured to adjust motor rotation parameters according to the control signal.

In one of the embodiments, the motor driving module includes: a seventeenth resistor, an eighteenth resistor, a nineteenth resistor, a twentieth resistor, a twenty-first resistor, a twenty-second resistor, a twenty-third resistor, a twenty-fourth resistor, a twenty-fifth resistor, a twenty-sixth resistor, a second PMOS transistor, a third PMOS transistor, a first NMOS transistor and a second NMOS transistor, wherein
a first end of the seventeenth resistor, a first end of the nineteenth resistor, a first end of the twentieth resistor, a first end of the twenty-third resistor, a first end of the twenty-fourth resistor and a first end of the twenty-fifth resistor are collectively connected to the main control module, a second end of the seventeenth resistor and a first end of the eighteenth resistor are collectively connected to a gate electrode of the first NMOS transistor, a second end of the eighteenth resistor and a source electrode of the first NMOS transistor are collectively connected to the ground, a drain electrode of the first NMOS transistor is connected to a drain electrode of the second PMOS transistor, a second end of the nineteenth resistor is connected to the ground, a second end of the twentieth resistor and a first end of the twenty-first resistor are collectively connected to a gate electrode of the second PMOS transistor, a second end of the twenty-first resistor, a source electrode of the second PMOS transistor, a source electrode of the third PMOS transistor and a first end of the twenty-second resistor are collectively connected to the main control module, a second end of the twenty-second resistor and a second end of the twenty-third resistor are collectively connected to a gate electrode of the third PMOS transistor, a second end of the twenty-fourth resistor is connected to the ground, a drain electrode of the third PMOS transistor is connected to a drain electrode of the second NMOS transistor, a second end of the twenty-fifth resistor and a first end of the twenty-sixth resistor are collectively connected to a gate electrode of the second NMOS transistor, and a second end of the twenty-sixth resistor and a source electrode of the second NMOS transistor are collectively connected to the ground.

In one of the embodiments, the control circuit further includes:
an indicator lamp module, connected to the main control module, and configured to obtain an indicator lamp alarm signal according to the control signal; and
a speaker module, connected to the main control module, and configured to obtain an audio alarm signal according to the control signal.

In one of the embodiments, the indicator lamp module includes LED arrays in a number of N, wherein N is a positive integer greater than 1, wherein
each of the LEDs includes a resistor and a light emitting diode, one end of the resistor is connected to a common terminal of the indicator lamp module, the other end of the resistor is connected to an anode of the light emitting diode, and a cathode of the light emitting diode is connected to the main control module.

In one of the embodiments, the position detection module includes: an acceleration sensor, an eighth capacitor, a ninth capacitor and a tenth capacitor, wherein
the acceleration sensor includes an acceleration sensor chip, wherein a serial communication pin of the acceleration sensor chip is connected to the main control module, a power supply pin of the acceleration sensor chip is connected to the main control module, a grounding pin of the acceleration sensor chip is connected to the ground, a first end of the eighth capacitor and a first end of the ninth capacitor are collectively connected to the ground, a second end of the eighth capacitor is connected to the serial communication pin of the acceleration sensor chip, a second end of the ninth capacitor is connected to the power supply pin of the acceleration sensor chip, and a power supply driving pin of the acceleration sensor chip is connected to the ground through the tenth capacitor.

In one of the embodiments, the acceleration sensor is a three-axis acceleration sensor, a six-axis acceleration sensor or a nine-axis acceleration sensor.

In one of the embodiments, the control circuit further includes:
a storage module, connected to the main control module, and configured to store the oral data according to the control signal; and
an electric quantity detection module, connected to the main control module, and configured to detect an electric quantity of the main control module and obtain an electric quantity detection signal according to the control signal.

In one of the embodiments, the storage module includes: a storage chip and an eleventh capacitor, a grounding pin of the storage chip is connected to the ground, a serial communication pin of the storage chip is connected to the main control module, a power supply pin of the storage chip is connected to the main control module, and the eleventh capacitor is connected between the power supply pin of the storage chip and the ground.

In one of the embodiments, the electric quantity detection module includes: a twelfth capacitor, a twenty-seventh resistor, a twenty-eighth resistor and a twenty-ninth resistor, wherein
a first end of the twelfth capacitor and a first end of the twenty-seventh resistor are collectively connected to the main control module, a second end of the twelfth capacitor and a first end of the twenty-ninth resistor are collectively connected to the ground, a second end of the twenty-seven resistor and a second end of the twenty-ninth resistor are collectively connected to a first end of the twenty-eighth resistor, and a second end of the twenty-eighth resistor is connected to the main control module.

In a second aspect, the present disclosure provides a smart toothbrush, including the control circuit as described above.

In a third aspect, the present disclosure provides a smart monitoring method of tooth-brushing behavior, including:
acquiring, by a smart toothbrush, oral data of a user, when the user is brushing teeth, wherein the oral data includes brush head type, tooth-brushing posture data and tooth-brushing pressure data;
transmitting, by the smart toothbrush, the oral data to the smart terminal;
sending, by the smart toothbrush and/or the smart terminal, a tooth-brushing behavior guidance signal to the user according to the oral data;
uploading, by the smart terminal, the oral data to the cloud server;
analyzing and processing, by the cloud server, the oral data to obtain the tooth-brushing behavior information of the user; and
monitoring the tooth-brushing behavior of the user according to the tooth-brushing behavior information.

In one of the embodiment, the sending, by the smart toothbrush and/or the smart terminal, a tooth-brushing behavior guidance signal to the user according to the oral data specifically comprises,
generating, by the smart toothbrush, a control signal according to the oral data; and sending, by the smart toothbrush and/or the smart terminal, the tooth-brushing behavior guidance signal to the user according to the control signal.

The beneficial technical effects achieved by the present disclosure with respect to the prior art are as follows: in the above control circuit of smart toothbrush, the oral data is obtained by gathering the brush head type, the tooth-brushing posture data and the tooth-brushing pressure data by the main control module, wherein the oral data comprehensively contains the tooth-brushing behavior information of the user, the oral data is uploaded to the cloud server and is subjected to in-depth data analysis and processing, thereby realizing the real-time and comprehensive monitoring on the tooth-brushing behavior and oral health of the user, and improving the user's intelligent experience; meanwhile, in the process of tooth-brushing of the user, the main control module generates the control signal according to the oral data, the brush head module, the position detection module and the pressure detection module send a plurality of kinds of tooth-brushing prompt and guide information to the user according to the control signal, for example, tooth-brushing position correction, and tooth-brushing pressure correction, therefore, the tooth-brushing behavior of the user may be corrected in real time just by the brush head module, the position detection module and the pressure detection module, and the smart terminal may synchronously display the tooth-brushing behavior of the user according to the control signal, so that the user always keeps the optimal tooth-brushing state, and thus the dental health of the user is protected comprehensively; thus, the problems in the prior art that the control circuit of the smart toothbrush lacks all-around, in-depth data analysis and processing on the tooth-brushing data and that the intelligent experience of the user is relatively low are effectively solved.

### Brief Description of Drawings

In order to more clearly illustrate technical solutions in embodiments of the present disclosure, accompanying drawings which need to be used in the description of the embodiments will be introduced briefly below, and apparently, the accompanying drawings in the description below merely show some embodiments of the present disclosure, and a person skilled in the art still could obtain other drawings in light of these accompanying drawings, without using inventive efforts.
FIG. 1 is a block diagram of an application system of a control circuit of a smart toothbrush provided in an embodiment of the present disclosure;
FIG. 2 shows a modular structure of a control circuit of a smart toothbrush provided in an embodiment of the present disclosure;
FIG. 3 shows a modular structure of a main control module provided in an embodiment of the present disclosure;
FIG. 4 shows a circuit structure of a charging unit provided in an embodiment of the present disclosure;
FIG. 5 shows a circuit structure of a voltage stabilizing unit provided in an embodiment of the present disclosure;
FIG. 6 shows a circuit structure of a main control unit provided in an embodiment of the present disclosure;
FIG. 7 shows a circuit structure of a communication unit provided in an embodiment of the present disclosure;
FIG. 8 shows pin wiring of a processing chip provided in an embodiment of the present disclosure;
FIG. 9 shows a connection structure of peripheral electronic components of a processing chip provided in an embodiment of the present disclosure;
FIG. 10 shows a circuit structure of a pressure detection module provided in an embodiment of the present disclosure;
FIG. 11 shows another modular structure of the control circuit of the smart toothbrush provided in an embodiment of the present disclosure;
FIG. 12 shows a circuit structure of a motor driving module provided in an embodiment of the present disclosure;
FIG. 13 shows a circuit structure of an indicator lamp module provided in an embodiment of the present disclosure;
FIG. 14 shows a circuit structure of a speaker module provided in an embodiment of the present disclosure;
FIG. 15 shows a circuit structure of a position detection module provided in an embodiment of the present disclosure;
FIG. 16 shows another modular structure of the control circuit of the smart toothbrush provided in an embodiment of the present disclosure;
FIG. 17 shows a circuit structure of a storage module provided in an embodiment of the present disclosure;
FIG. 18 shows a circuit structure of an electric quantity detection module provided in an embodiment of the present disclosure;
FIG. 19 shows a modular structure of a smart toothbrush provided in an embodiment of the present disclosure;
FIG. 20 shows an implementing flow of a smart monitoring method of tooth-brushing behavior provided in an embodiment of the present disclosure; and
FIG. 21 shows an implementing flow that the smart terminal and/or the smart toothbrush provided in an embodiment of the present disclosure monitors the tooth-brushing behavior of the user according to the tooth-brushing behavior information.

### Detailed Description of Embodiments

In order to make clearer the object, technical solutions and advantages of the present disclosure, the present disclosure is further described in detail below in combination with accompanying drawings and embodiments. It should be understood that the specific embodiments described herein are merely used to explain the present disclosure but not to limit the present disclosure.

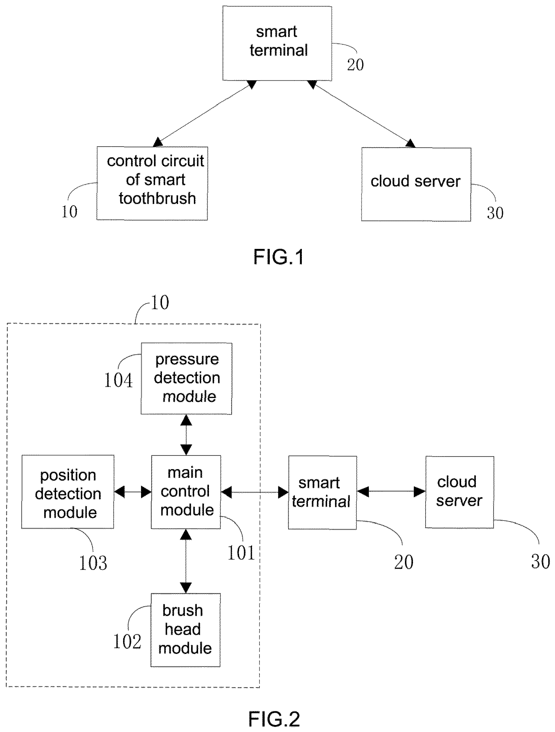

FIG. 1 shows a block diagram of an application system of a control circuit 10 of a smart toothbrush provided in an embodiment of the present disclosure, wherein the control circuit 10 is applied to the smart toothbrush, and for convenience of illustration, only the parts related to the embodiment of the present disclosure are shown, and details thereof are as follows.

As shown in FIG. 1, the control circuit 10 is connected to the cloud server 30 through a smart terminal 20, and oral data detected by the control circuit 10 is wirelessly transmitted to the cloud server 30 through the smart terminal 20; it should be noted that, as a highly distributed and highly virtualized big data processing platform, the cloud server 30 may centralize various kinds of oral data transmitted in parallel through the smart terminal 20, and store and process different types of data to perform large-scale data modeling and analysis; and compared with the conventional physical storage medium, the cloud server 30 has the advantages of a large storage capacity, a high data processing speed, a wide transmission range and high intelligence.

Optionally, the smart terminal 20 is a transfer station, a router, a computer, a U disk, a card reader, a computer memory, a smart mobile phone, a tablet computer and so on; optionally, an APP (Application) installed on the smart terminal 20 has the function of transmission and display of data, and the oral data detected by the control circuit 10 can be transmitted to the cloud server 30 through the APP; a plurality of smart data processing algorithms are stored in advance in the cloud server 30, and compared with the conventional statistical method, these artificial intelligence algorithms can analyze to obtain historical tooth-brushing behavior information of the user and the change situation of the dental health state of the user just after smart processing on the acquired big data; on the one hand, when the cloud server 30 receives the oral data, the oral data is processed, analyzed and mined in depth based on the smart data processing algorithms, thus the tooth-brushing behavior state and the dental health state of the user are obtained, and the historical tooth-brushing information of the user is recorded; on the other hand, the control circuit 10 obtains a control signal according to the oral data, at this time, various function modules in the control circuit 10 can send various kinds of tooth-brushing behavior guidance information to the user in real time, for example, left or right hand tooth-brushing guidance information, and smart wake-up information, based on the control signal, the plurality of function modules in the control circuit 10 can enable the user to always keep an optimal tooth-brushing state just by sending various kinds of tooth-brushing behavior guidance information; meanwhile, the control circuit 10 sends the control signal to the APP on the smart terminal 20, and the user can monitor his/her own tooth-brushing behavior and dental health condition through the APP in real time, and a tooth-brushing behavior suggestion, prompt information and so on may be sent to the user in real time through the APP in the tooth-brushing process of the user; thus, when the user uses the smart toothbrush including the control circuit 10, the user may monitor his/her own tooth-brushing behavior anytime and anywhere, and the dental health condition of the user is obtained upon analysis through the smart data processing algorithms, and the change amount of the dental health condition of the user is recorded, thereby providing the user's intelligent experience.

FIG. 2 shows a modular structure of the control circuit 10 of the smart toothbrush provided in an embodiment of the present disclosure, and for convenience of illustration, only the parts related to the embodiment of the present disclosure are shown, and details thereof are as follows.

As shown in FIG. 1, the control circuit 10 of the smart toothbrush includes: a main control module 101, a brush head module 102, a position detection module 103 and a pressure detection module 104, wherein the main control module 101 is connected to the cloud server 30 through the smart terminal 20, and optionally, the main control module 101 is wirelessly connected to the cloud server 30 through the smart terminal 20, so that the main control module 101 and the cloud server 30 can realize a bidirectional data interaction operation therebetween; when the user is brushing teeth, the main control module 101 receives a brush head type, tooth-brushing posture data, tooth-brushing pressure data and so on, and gathers and classifies the received data to obtain the oral data, wherein the oral data may include various types of data generated by the user when using the smart toothbrush. The oral data includes, but is not limited to, the brush head type, the tooth-brushing posture data and the tooth-brushing pressure data, and the cloud server 30 can comprehensively evaluate the tooth-brushing behavior state of the user through the oral data; and the main control module 101 uploads the oral data to the cloud server 30 to realize a big data analysis operation on the oral data, thereby realizing real-time monitoring of the user's tooth-brushing behavior.

Meanwhile, the main control module 101 further generates the control signal according to the oral data; as the tooth-brushing behavior information of the user can be comprehensively analyzed and obtained through the oral data, the main control module 101 generates the control signal after processing and analyzing the oral data, wherein the control signal includes all pieces of tooth-brushing behavior information and state data of the user.

The brush head module 102 is connected to the main control module 101, the brush head module 102 detects a type characteristic of a brush head selected by the user to obtain the brush head type, and uploads the brush head type to the main control module 101, the main control module 101 transmits the control signal to the brush head module 102, and the brush head module 102 obtains a brush head indication signal according to the control signal; optionally, the type characteristic of the brush head includes a model identifier of the brush head. The brush head type may be obtained according to the model identifier. In addition, a physical structure, a manufacturing material, a service life, a user's tooth-brushing mode, a user's tooth-brushing force, a user's tooth-brushing duration and so on may also be included.

It should be noted that, as the user uses the same toothbrush to brush teeth in a certain period of time, with the increase of the tooth-brushing time of the user, the brush head of the toothbrush is also damaged to a certain extent and a large number of harmful bacteria are also aggregated, thereby damaging the oral health of the user; during practical application, the normal service life of a toothbrush is 90 days if effective tooth-brushing is carried out twice every day; if the type characteristics of the brush head selected by the user are different, the service life of the brush head, the bristle type, the bristle characteristic and the physical structure of the brush head and so on are quite different, therefore the brush head module 102 obtains the brush head type by detecting the type of the brush head selected by the user, and the brush head usage situation of the user can be comprehensively detected through the brush head type; when the main control module 101 uploads the brush head type to the main control module 101, the main control module 101 analyzes to obtain the brush head usage information of the smart toothbrush selected by the user according to the brush head type, wherein the brush head usage information includes, but is not limited to, whether the service life of the brush head used by the user has expired, and the control signal is generated thereby; when the main control module 101 transmits the control signal to the brush head module 102, the brush head module 102 obtains the brush head indication signal according to the control signal, then the control circuit 10 reminds the user to change the brush head in time through voice broadcasting, vibration, light and other manners according to the brush head indication signal; and if the brush head used by the user exceeds the service life of the brush head, the control circuit 10 not only sends alarm prompt information in time according to the brush head indication signal, but even adopts a corresponding measure to stop the brush head from working, so as to prevent the user from using a waste brush head for a long time to cause adverse effects on the oral health.

Further, the main control module 101 receives the brush head type and generates the control signal thereby, and the information of the brush head used by the user can be obtained through the control signal, for example, the physical state, the remaining service life and other information of the brush head selected by the user can be predicted through the control signal; when the main control module 101 transmits the control signal to the smart terminal 20, the user is reminded in real time, through a visual intuitive interface by the APP installed on the smart terminal 20, that the toothbrush head needs to be changed in time; thus, the brush head of the user is ensured to be in an optimal working state in various aspects.

Further, as the brush head module 102 receives the control signal generated by the main control module 101, parameters of the brush head may be modified according to the control signal, wherein the parameters of the brush head include: tooth-brushing mode, force, duration and so on, and the modified parameters of the brush head are stored in the control circuit 10, then when the user uses the toothbrush next time, the main control module 101 will directly read the modified parameters of the brush head of the user, so as to match the tooth-brushing mode, force, duration, etc. of the smart toothbrush; thus, the bidirectional data interaction operation can be carried out between the user and the smart toothbrush.

The position detection module 103 is connected to the main control module 101, and the position detection module 103 detects the user's tooth-brushing posture to obtain the tooth-brushing posture data, and transmits the tooth-brushing posture data to the main control module 101; a correct tooth-brushing position plays an important role in cleaning teeth and to the dental health when the user brushes teeth, but in practical operation, the user often has bad tooth-brushing habits, thus resulting in poor tooth-brushing effect of the user; in order to correct the user's tooth-brushing habits, the user's tooth-brushing posture is detected in real time by the position detection module 103 to obtain the tooth-brushing posture data, wherein the tooth-brushing posture data includes position information of the user in the tooth-brushing process; the main control module 101 generates the control signal according to the tooth-brushing posture data, wherein the control signal includes tooth-brushing posture information of the user, the main control module 101 transmits the control signal to the position detection module 103, the position detecting module obtains a tooth-brushing posture guide signal according to the control signal, wherein the tooth-brushing posture guide signal is configured to send tooth-brushing posture real-time guidance information to the user, for example, the tooth-brushing posture real-time guidance information includes: left hand tooth-brushing or right hand tooth-brushing, transverse brushing, false tooth-brushing posture reminder, smart wake-up, etc.; meanwhile, the main control module 101 uploads the control signal to the APP in the smart terminal 20, and the user can see his/her own tooth-brushing position through the APP; meanwhile, the smart terminal 20 uploads the tooth-brushing posture data to the cloud server 30, and a tooth-brushing results of the user in multiple regions and on multiple surfaces can be displayed in real time through the big data analysis algorithm in the cloud server 30, and the user is guided in real time to adjust the tooth-brushing posture, thereby ensuring from many aspects that the user obtains an optimal tooth-brushing effect when brushing teeth.

The pressure detection module 104 is connected to the main control module 101, and the pressure detection module 104 detects the tooth-brushing pressure of the user to obtain the tooth-brushing pressure data, and transmits the tooth-brushing pressure data to the main control module 101; in the tooth-brushing process of the user, if the tooth-brushing pressure of the user is too large, the bristles of the toothbrush may cause certain wear on the gingiva and teeth; on the contrary, if the tooth-brushing pressure of the user is too small, the toothbrush cannot function to clean teeth; therefore, an appropriate tooth-brushing pressure is required to keep the optimal tooth-brushing effect; through the pressure detection module 104, the tooth-brushing pressure of the user can be detected in real time and the tooth-brushing pressure data can be obtained, and the tooth-brushing pressure of the user in the tooth-brushing process can be detected through the tooth-brushing pressure data; the main control module 101 generates the control signal according to the tooth-brushing pressure data, and when the pressure detection module 104 receives the control signal, the pressure detection module 104 generates a pressure detection signal according to the control signal, and can send prompt information of too large/too small real-time tooth-brushing pressure, anti-splash prompt information, etc. to the user through the pressure detection signal.

Specifically, if the control circuit 10 detects that the tooth-brushing pressure of the user is too large, the pressure detection module 104 appropriately reduces vibration frequency and vibration strength of the toothbrush according to the pressure detection signal, so as to reduce the wear of the bristles of the toothbrush on the teeth, and meanwhile, the user also may be prompted to pay attention to the tooth-brushing pressure through motor vibration, indicator lamp and speaker prompt information; or when the user uses the smart toothbrush to brush teeth, the highfrequency motor vibration may cause toothpaste to fall off or toothpaste foam to splash around, and when the user turns on the smart toothbrush to brush teeth, the user does not actually brush teeth, that is, the brush head of the smart toothbrush does not enter the oral cavity of the user, at this time, the tooth-brushing pressure detected by the control circuit 10 is a small value, then the pressure detection module 104 appropriately reduces the vibration frequency and the vibration amplitude according to the pressure detection signal, so as to prevent fall-off of the toothpaste or splashing of the toothpaste foam; subsequently, if the user actually uses the smart toothbrush to brush teeth (i.e. after the brush head of the smart toothbrush enters the oral cavity of the user), the tooth-brushing pressure detected by the control circuit 10 will get increased, and when the tooth-brushing pressure exceeds a predetermined threshold value, the smart toothbrush starts to work normally according to the pressure detection signal, i.e. the motor of the toothbrush starts to work normally.

As a preferred embodiment therein, the pressure detection module 104 may record total tooth-brushing duration of the user according to the pressure detection signal; optionally, when the pressure detection module 104 detects that the user is actually in a toothpaste splashing state when brushing teeth, the pressure detection module 104 can obtain, according to the pressure detection signal, that the user does not actually brush teeth, then the pressure detection module will not count the time of toothpaste splashing during the tooth-brushing into the total duration of tooth-brushing, thereby improving the accuracy of the pressure detection module 104 in recording the total duration of the user according to the pressure detection signal, and the control circuit 10 may evaluate the tooth-brushing pressure situation of the user more comprehensively according to the pressure detection signal.

Specifically, the main control module 101 uploads the tooth-brushing pressure data to the cloud server 30 through the smart terminal 20, and obtains the actual tooth-brushing situation of the user through smart processing, analysis and evaluation on the tooth-brushing pressure data; therefore, the historical tooth-brushing pressure data of the user may be more comprehensively analyzed in depth through the smart algorithm stored in the cloud server 30, to predict and evaluate the tooth-brushing health condition of the user.

Through the embodiment of the present disclosure, in the control circuit 10 of the smart toothbrush, on the one hand, the main control module 101 uploads the oral data of the user to the cloud server 30 through the smart terminal 20, wherein the oral data includes various kinds of tooth-brushing data generated in the tooth-brushing process of the user, and when the cloud server 30 receives the oral data, the oral data is processed and analyzed in depth in real time based on a plurality of data processing algorithms, and the user's tooth-brushing behavior and oral health condition can be monitored comprehensively just by processing and analyzing the oral data in depth, thus improving the intelligent experience and comfort of the user when using the smart toothbrush; on the other hand, the main control module 101 generates the control signal according to the oral data, wherein the control signal comprehensively includes the tooth-brushing behavior of the user, therefore, the brush head module 102, the position detection module 103 and the pressure detection module 104 synchronously send correction and guidance information for the tooth-brushing behavior according to the control signal, respectively, to correct bad tooth-brushing behavior of the user, so that the user is allowed to always keep the optimal tooth-brushing state, and maintain the dental health of the user; and meanwhile, the user further may obtain his/her own tooth-brushing behavior through the APP on the smart terminal 20, and the user can more intuitively learn his/her real-time tooth-brushing behavior and oral health, so as to effectively solve the problems in the prior art that the control circuit of the smart toothbrush cannot analyze or process the tooth-brushing data in depth and that the intelligent experience of the user is not good.

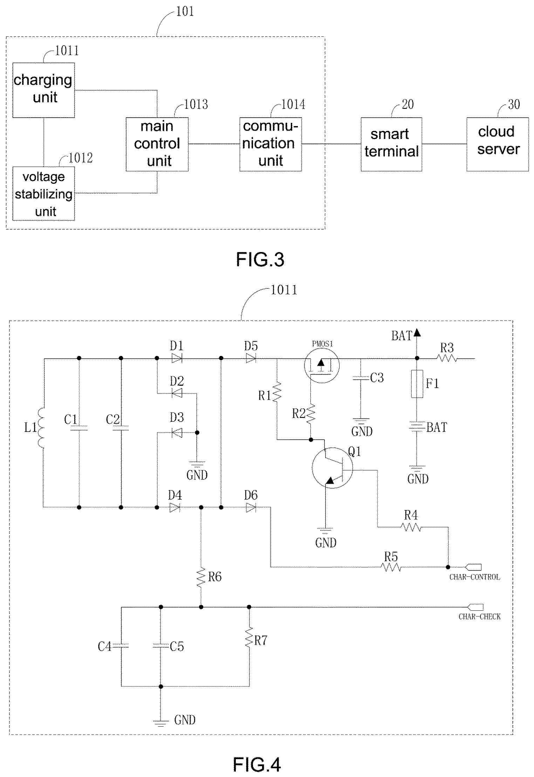

FIG. 3 shows a modular structure of the main control module 101 provided in an embodiment of the present disclosure, and details thereof are as follows.

As shown in FIG. 3, the main control module 101 includes a charging unit 1011, a voltage stabilizing unit 1012, a main control unit 1013 and a communication unit 1014, wherein the charging unit 1011 is configured to access a power supply signal which may be configured to provide corresponding electrical power to the main control module 101; the voltage stabilizing unit 1012 is connected to the charging unit 1011, and the voltage stabilizing unit 1012 obtains a voltage stabilizing signal according to the power supply signal, wherein the voltage stabilizing signal is configured to provide a stable direct current power supply to the main control module 101, so as to drive various electronic components in the main control module 101 to be in a stable working state; the main control unit 1013 is connected to the charging unit 1011 and the voltage stabilizing unit 1012, when the main control unit 1013 receives the brush head type, the tooth-brushing posture data and the tooth-brushing pressure data, the main control unit 1013 obtains the oral data of the user by gathering the brush head type, the tooth-brushing posture data and the tooth-brushing pressure data, and through the oral data, the tooth-brushing behavior and the oral health of the user can be detected comprehensively, meanwhile, the main control unit 1013 generates the control signal according to the oral data, and the user's tooth-brushing behavior information can be evaluated in real time through the control signal; the communication unit 1014 is connected between the main control unit 1013 and the cloud server 30, the communication unit 1014 uploads the oral data of the user to the cloud server 30 through the smart terminal 20, the oral data is processed and analyzed in depth by the smart data processing algorithms stored in the cloud server 30, so as to monitor the tooth-brushing behavior of the user in real time.

FIG. 4 shows a circuit structure of the charging unit 1011 provided in an embodiment of the present disclosure, and details thereof are as follows.

As shown in FIG. 4, the charging unit 1011 includes a first inductor L1, a first capacitor C1, a second capacitor C2, a third capacitor C3, a fourth capacitor C4, a fifth capacitor C5, a first diode D1, a second diode D2, a third diode D3, a fourth diode D4, a fifth diode D5, a sixth diode D6, a first resistor R1, a second resistor R2, a third resistor R3, a fourth resistor R4, a fifth resistor R5, a sixth resistor R6, a seventh resistor R7, a first PMOS transistor PMOS1, a first NPN-type triode Q1, a battery BAT and a fuse F1.

According to the circuit structure of the charging unit 1011 shown in FIG. 4, the battery BAT may be used to supply direct current electrical power, and by connecting the fuse F1 and the battery BAT, a power supply current output by the battery BAT can be prevented from being too large, thereby realizing safety protection for each power component in the charging unit 101; specifically, a first end of the first inductor L1, a first end of the first capacitor C1, a first end of the second capacitor C2 and a cathode of the second diode D2 are collectively connected to an anode of the first diode D1, a second end of the first inductor L1, a second end of the first capacitor C1, a second end of the second capacitor C2 and a cathode of the third diode D3 are collectively connected to an anode of the fourth diode D4, an anode of the second diode D2 and an anode of the third diode D3 are collectively connected to the ground GND, a cathode of the first diode D1, an anode of the fifth diode D5, a cathode of the fourth diode D4 and an anode of the sixth diode D6 are collectively connected to a first end of the sixth resistor R6, a second end of the sixth resistor R6, a first end of the fourth capacitor C4, a first end of the fifth capacitor C5 and a first end of the seventh resistor R7 are collectively connected to the main control unit 1013, a second end of the fourth capacitor C4, a second end of the fifth capacitor C5 and a second end of the seventh resistor R7 are collectively connected to the ground GND, a cathode of the sixth diode D6 is connected to a first end of the fifth resistor R5, a cathode of the fifth diode D5 and a first end of the first resistor R1 are collectively connected to a source electrode of the first PMOS transistor PMOS1, a first end of the second resistor R2 is connected to a gate electrode of the first PMOS transistor PMOS1, a second end of the first resistor R1 and a second end of the second resistor R2 are collectively connected to a collector of the first NPN-type triode Q1, an emitter of the first NPN-type triode Q1 is connected to the ground GND, a drain electrode of the first PMOS transistor PMOS1, a first end of the third capacitor C3, a first end of the fuse F1 and a first end of the third resistor R3 are collectively connected to the main control unit 1013, for transmitting the power supply signal BAT to the main control unit 1013, and electrical power can be supplied to the main control unit 1013 just through this power supply signal BAT, a second end of the third resistor R3 is connected to the voltage stabilizing unit 1012, a second end of the fuse F1 is connected to a positive electrode of the battery BAT, a negative electrode of the battery BAT is connected to the ground GND, a second end of the third capacitor C3 is connected to the ground GND, a base of the first NPN-type triode Q1 is connected to a first end of the fourth resistor R4, and a second end of the fourth resistor R4 and a second end of the fifth resistor R5 are collectively connected to the main control unit 1013.

As the charging unit 1011 is connected to the main control unit 1013, then the electrical power output state of the charging unit 1011 is directly adjusted through the main control unit 1013, ensuring the operation stability of various electronic components in the main control module 101.

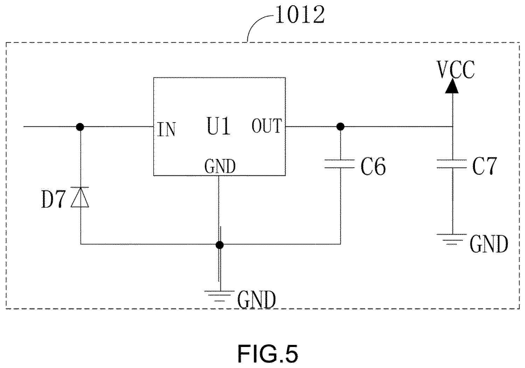

FIG. 5 shows a circuit structure of the voltage stabilizing unit 1012 provided in an embodiment of the present disclosure, and details thereof are as follows.

As shown in FIG. 5, the voltage stabilizing unit 1012 includes: a seventh diode D7, a sixth capacitor C6, a seventh capacitor C7 and a voltage stabilizing chip U1, wherein a cathode of the seventh diode D7 and a power supply signal input pin IN of the voltage stabilizing chip U1 are collectively connected to the charging unit 1011, for inputting the power supply signal BAT; a voltage stabilizing signal output pin OUT of the voltage stabilizing chip U1, a first end of the sixth capacitor C6 and a first end of the seventh capacitor C7, which are output ends of the voltage stabilizing unit 1012, are collectively connected to the main control unit 1013; a second end of the seventh capacitor C7 is connected to the ground GND, a second end of the sixth capacitor C6, a grounding pin GND of the voltage stabilizing chip U1 and an anode of the seventh diode D7 are collectively connected to the ground GND.

Optionally, the voltage stabilizing chip U1 is an AX6201 series chip.

It should be noted that, the voltage stabilizing signal VCC can be obtained just according to the power supply signal BAT through the voltage stabilizing chip U1, and the voltage stabilizing signal VCC is output through the output end of the voltage stabilizing unit 1012, so that various electronic components in the control circuit 10 are driven to be in a stable working state.

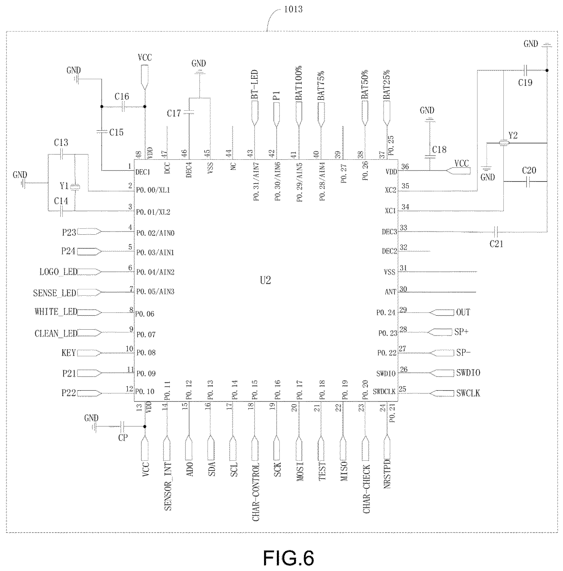

FIG. 6 shows a circuit structure of the main control unit 1013 provided in an embodiment of the present disclosure, and details thereof are as follows.

As shown in FIG. 6, the main control unit 1013 includes a main control chip U2, wherein a power supply pin VDD of the main control chip U2 is connected to the voltage stabilizing unit 1012, for inputting the voltage stabilizing signal VCC; power supply control pins P0.15 and P0.20 of the main control chip U2 are connected to the charging unit 1011, for inputting the power supply signal BAT; communication pins VSS and ANT of the main control chip U2 are connected to the communication unit 1014, for transmitting the oral data to the communication unit 1014; the electronic components in the main control unit 1013 are ensured to be in a normal working state through the voltage stabilizing signal VCC and the power supply signal BAT; a serial communication pin of the main control chip U2 is connected to the brush head module 102, the position detection module 103 and the pressure detection module 104, for transmitting the control signal to various function modules in the control circuit 10, and in conjunction with FIG. 6, the serial communication pins of the main control chip U2 therein include: P0.11, P0.13, P0.14, P0.15, P0.16, P0.17, P0.18, P0.19, P0.20, etc.; when the main control chip U2 receives the brush head type, the tooth-brushing posture data and the tooth-brushing pressure data, the main control chip U2 and its peripheral electronic components gather the above data to obtain the oral data of the user and send the oral data to the communication unit 1014.

Preferably, the main control chip U2 is an NRF52810 series chip.

As a preferred embodiment, in combination with FIG. 6, a peripheral circuit of the main control chip U2 includes: a thirteenth capacitor C13, a fourteenth capacitor C14, a fifteenth capacitor C15, a sixteenth capacitor C16, a seventeenth capacitor C17, an eighteenth capacitor C18, a nineteenth capacitor C19, a twentieth capacitor C20, a twenty-first capacitor C21, a charging capacitor CP, a first crystal oscillator Y1 and a second crystal oscillator Y2.

In the above, a first end of the thirteenth capacitor C13 and a first end of the fourteenth capacitor C14 are collectively connected to the ground GND, a second end of the thirteenth capacitor C13 and a first end of the first crystal oscillator Y1 are collectively connected to a first data transmission pin P0.0/XL1 of the main control chip U2, a second end of the fourteenth capacitor C14 and a second end of the first crystal oscillator Y1 are collectively connected to a second data transmission pin P0.1/XL2 of the main control chip U2, a first end of the fifteenth capacitor C15 and a first end of the sixteenth capacitor C16 are collectively connected to the ground GND, a second end of the fifteenth capacitor C15 is connected to a first driving signal pin DEC1 of the main control chip U2, a second end of the sixteenth capacitor C16 is connected to the power supply pin VDD of the main control chip U2, the seventeenth capacitor C17 is connected between a second driving signal pin DEC4 of the main control chip U2 and the ground GND, the eighteenth capacitor C18 is connected between the power supply pin VDD of the main control chip U2 and the ground, a first end of the nineteenth capacitor C19 and a first input/output end of the second crystal oscillator Y2 are collectively connected to a second crystal oscillator signal input pin XC2 of the main control chip U2, a first end of the twentieth capacitor C20 and a second input/output end of the second crystal oscillator Y2 are collectively connected to a first crystal oscillator signal input pin XC1 of the main control chip U2, a grounding end of the second crystal oscillator Y2 is connected to the ground GND, a second end of the nineteenth capacitor C19, a second end of the twentieth capacitor C20 and a first end of the twenty-first capacitor C21 are collectively connected to the ground, a second end of the twenty-first capacitor C21 is connected to a third driving signal pin DEC3 of the main control chip U2, the charging capacitor CP is connected between the power supply pin VDD of the main control chip U2 and the ground, wherein the serial communication pin of the main control chip U2 is configured to be connected with the brush head module 102, the position detection module 103 and the pressure detection module 104, for accessing the brush head type, the tooth-brushing posture data and the tooth-brushing pressure data, so that the brush head type, the tooth-brushing posture data and the tooth-brushing pressure data are gathered by the main control chip U2 to obtain the oral data of the user, and the oral data is transmitted to the communication unit 1014 through the communication pins VSS and ANT of the main control chip U2.

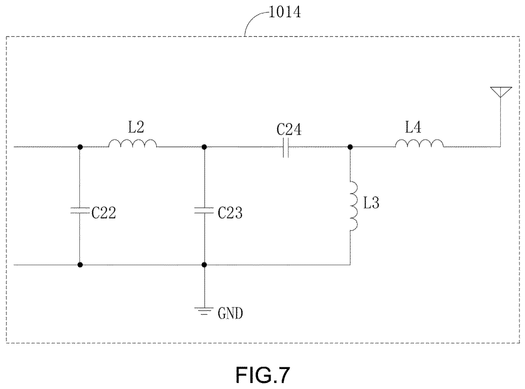

FIG. 7 shows a circuit structure of the communication unit 1014 provided in an embodiment of the present disclosure, and details thereof are as follows.

As shown in FIG. 7, the communication unit 1014 includes: a twenty-second capacitor C22, a twenty-third capacitor C23, a twenty-fourth capacitor C24, a second inductor L2, a third inductor L3 and a fourth inductor L4, wherein a first end of the second inductor L2 and a first end of the twenty-second capacitor C22 are input ends of the communication unit 1014, for inputting the oral data, and by combining the circuit structure of the main control unit 1013 shown in FIG. 6, a first end of the second inductor L2 and a first end of the twenty-second capacitor C22 are collectively connected to a communication pin ANT of the main control chip U2; a second end of the second inductor L2 and a first end of the twenty-third capacitor C23 are collectively connected to a first end of the twenty-fourth capacitor C24, a second end of the twenty-fourth capacitor C24 and a first end of the third inductor L3 are collectively connected to a first end of the fourth inductor L4, a second end of the twenty-second capacitor C22, a second end of the twenty-third capacitor C23 and a second end of the third inductor L3 are collectively connected to the ground GND, a second end of the fourth inductor L4 is an output end of the communication unit 1014, for uploading the oral data to the cloud server 30 through the smart terminal 20, specifically, the communication unit 1014 is connected to the smart terminal 20 through bluetooth wireless communication, then the output end of the communication unit 1014 uploads the oral data to the smart terminal 20 in a manner of bluetooth wireless communication, so that the main control module 101 and the smart terminal 20 can perform wireless data interactive transmission in a longer range.

By combining the circuit structure of the main control module 101 shown in FIG. 4 - FIG. 7, the main control module 101 obtains constant electrical power, driven by the power supply signal BAT and the voltage stabilizing signal VCC, then the main control module 101 can be ensured to be in a normal working state; meanwhile, the communication unit 1014 and the cloud server 30 can perform bidirectional data wireless interactive transmission, so that the main control module 101 can quickly upload the oral data to the cloud server 30, and obtain a tooth-brushing behavior result of the user upon smart processing and analysis on the oral data, and the cloud server 30 transmits the tooth-brushing behavior result of the user to the control circuit 10 of the smart toothbrush again through the communication unit 1014, so as to realize smart recording and monitoring of the historical tooth-brushing behavior of the user, and guide and predict the future tooth-brushing behavior of the user.

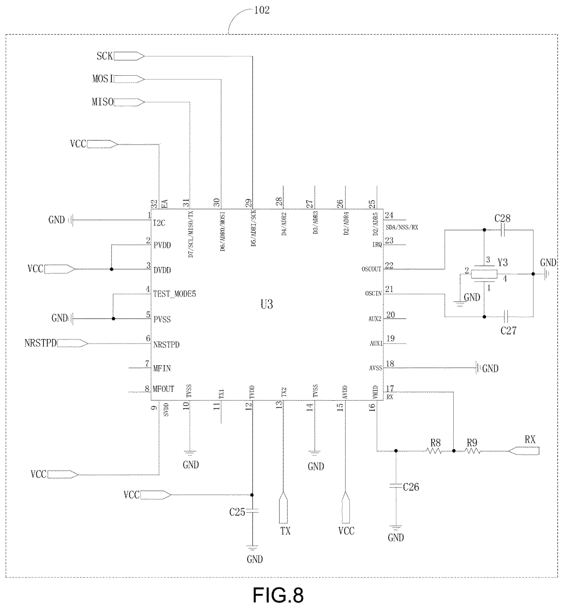

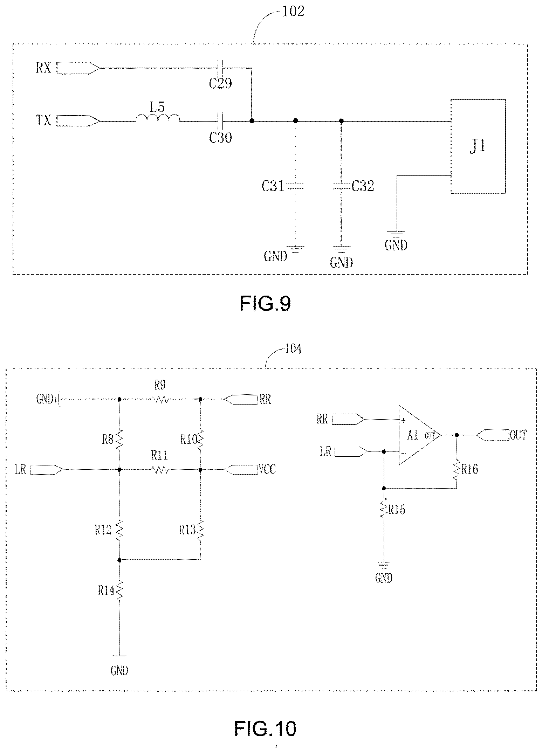

By combining the circuit structure of the brush head module 102 provided in an embodiment of the present disclosure shown in FIG. 8 and FIG. 9, FIG. 8 shows pin wiring of the processing chip provided in an embodiment of the present disclosure, FIG. 9 shows a connection structure of peripheral electronic components of the processing chip provided in an embodiment of the present disclosure, and details thereof are as follows.

In combination with FIG. 8 - FIG. 9, the brush head module 102 includes a processing chip U3, wherein a serial communication pin of the processing chip U3 is connected to the main control module 101, for transmitting the brush head type to the main control module 101 and receiving the control signal, so that bidirectional data interaction can be performed between the brush head module 102 and the main control module 101; a grounding pin of the processing chip U3 is connected to be ground GND; a power supply pin of the processing chip U3 is connected to the main control module 101, for inputting the voltage stabilizing signal VCC, and the brush head module 102 is ensured to be in a normal and stable working state by the voltage stabilizing signal VCC; and in the brush head module 102, by writing a user-specific ID (Identification) number in the processing chip U3, when the user brushes teeth, the user needs to check password on the brush head module 102, and only when the user successfully checks the password, can the user normally use the toothbrush to brush teeth, thereby ensuring that the brush head module 102 has an anti-counterfeiting function.

As an optional embodiment, a peripheral circuit of the processing chip U3 includes: a twenty-fifth capacitor C25, a twenty-sixth capacitor C26, a twenty-seventh capacitor C27, a twenty-eighth capacitor C28, a twenty-ninth capacitor C29, a thirtieth capacitor C30, a thirty-first capacitor C31, a thirty-second capacitor C32, an eighth resistor R8, a ninth resistor R9, a fifth inductor L5, a third crystal oscillator Y3 and a first connector J1, wherein the first connector J1 is fixedly connected to the processing chip U3, and the first connector J1 is detachably connected to the brush head.

Specifically, serial communication pins D7/SCL/MISO/TX, D6/ADRO/MOSI, D5/ADRI/SCK and NRSTPD of the processing chip U3 are collectively connected to the main control module 101, so as to realize bidirectional data transmission between the processing chip U3 and the main control module 101; the twenty-fifth capacitor C25 is connected between the power supply pin TVDD of the processing chip U3 and the ground GND, a serial port data sending pin TX2 of the processing chip U3 is connected to a first end of the fifth inductor L5, a first end of the twenty-sixth capacitor C26 and a first end of the eighth resistor R8 are collectively connected to a voltage division signal transmission pin VMID of the processing chip U3, a second end of the twenty-sixth capacitor C26 is connected to the ground GND, a second end of the eighth resistor R8 and a first end of the ninth resistor R9 are collectively connected to a serial port data receiving pin RX of the processing chip U3, a second end of the ninth resistor R9 is connected to a first end of the twenty-ninth capacitor C29, a second end of the fifth inductor L5 is connected to a first end of the thirtieth capacitor C30, a second end of the twenty-ninth capacitor C29, a second end of the thirtieth capacitor C30, a first end of the thirty-first capacitor C31 and a first end of the thirty-second capacitor C32 are connected to the ground GND through the first connector J1, a second end of the thirty-first capacitor C31 is connected to the ground GND, and a second end of the thirty-second capacitor C32 is connected to the ground GND.

In the above, a first end of the twenty-seventh capacitor C27 and a first input/output end of the third crystal oscillator Y3 are collectively connected to a crystal oscillator signal input pin OSCIN of the processing chip U3, a first end of the twenty-eighth capacitor C28 and a second input/output end of the third crystal oscillator Y3 are collectively connected to a crystal oscillator signal output pin OSCOUT of the processing chip U3, a grounding end of the third crystal oscillator Y3 is connected to the ground, and a second end of the twenty-seventh capacitor C27 and a second end of the twenty-eighth capacitor C28 are collectively connected to the ground GND.

Optionally, the processing chip U3 is an MH1608 series chip.

According to the circuit structure of the brush head module 102 shown in FIG. 8 and FIG. 9, when the user uses the toothbrush to brush teeth, the brush head module 102 detects the type characteristic of the brush head selected by the user, and writes the brush head parameters in advance in the processing chip U3, for example, the brush head parameters include: a minimum pressure threshold value and a maximum pressure threshold value, a tooth-brushing scheme, mode, force, duration, etc., and as the serial communication pin of the processing chip U3 is connected to the main control module 101, the processing chip U3 will send the detected brush head type to the main control module 101. On the one hand, the main control module 101 uploads the brush head type to the cloud server 30, and the big data processing and analysis are performed on the brush head type, on the other hand, the main control module 101 obtains the control signal according to the brush head type, the brush head module 102 obtains the brush head indication signal according to the control signal, then optimal brush head parameters of the type characteristic of the brush head may be matched and obtained based on the brush head indication signal, thereby ensuring that the user obtains an optimal real intelligent experience when using the toothbrush.

FIG. 10 shows a circuit structure of the pressure detection module 104 provided in an embodiment of the present disclosure, and details thereof are as follows.

As shown in FIG. 10, the pressure detection module 104 includes: an eighth resistor R8, a ninth resistor R9, a tenth resistor R10, an eleventh resistor R11, a twelfth resistor R12, a thirteenth resistor R13, a fourteenth resistor R14, a fifteenth resistor R15, a sixteenth resistor R16 and an operational amplifier A1.

In the above, a first end of the eighth resistor R8 and a first end of the ninth resistor R9 are collectively connected to the ground GND, a second end of the ninth resistor R9 and a first end of the tenth resistor R10 are collectively connected to a non-inverting input terminal+ of the operational amplifier A1, a second end of the ninth resistor R9, a first end of the eleventh resistor R11 and a first end of the twelfth resistor R12 are collectively connected to an inverting input terminal- of the operational amplifier A1, a second end of the tenth resistor R10, a second end of the eleventh resistor R11 and a first end of the thirteenth resistor R13 are collectively connected to the main control module 101, for accessing the voltage stabilizing signal VCC; a second end of the twelfth resistor R12 and a second end of the thirteenth resistor R13 are collectively connected to a first end of the fourteenth resistor R14, a second end of the fourteenth resistor R14 is connected to the ground GND, a first end of the fifteenth resistor R15 and a first end of the sixteenth resistor R16 are collectively connected to the inverting input terminal- of the operational amplifier A1, a second end of the fifteenth resistor R15 is connected to the ground GND, and a second end of the sixteenth resistor R16 and an output terminal OUT of the operational amplifier A1 are collectively connected to the main control module 101, for transmitting the tooth-brushing pressure data to the main control module 101.

It should be noted that the tooth-brushing pressure data may be used for monitoring the tooth-brushing pressure of the user, the tooth-brushing pressure data is uploaded to the cloud server 30 through the main control module 101, and the smart processing and analysis is performed on the tooth-brushing pressure data based on the smart data processing algorithms stored in the cloud server 30, so as to evaluate the tooth-brushing behavior state of the user in a certain historical period; on the other hand, the control module 101 generates a control signal according to the tooth-brushing pressure data, the pressure detection module 104 obtains a pressure detection signal according to the control signal, and the control circuit 10 may detect, according to the pressure detection signal, whether the tooth-brushing pressure of the user is in a normal range and synchronously sends the tooth-brushing pressure prompt information to the user, so as to realize accurate recording and real-time smart evaluation of the tooth-brushing pressure of the user.

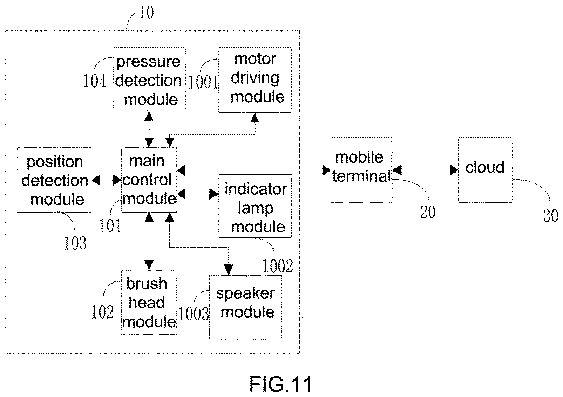

FIG. 11 shows another modular structure of the control circuit 10 of the smart toothbrush provided in an embodiment of the present disclosure, and compared with the modular structure of the control circuit 10 shown in FIG. 1, the control circuit 10 shown in FIG. 11 further includes: a motor driving module 1001, an indicator lamp module 1002 and a speaker module 1003, and details thereof are as follows.

In the above, in the control circuit 10 shown in FIG. 11, the main control module 101 obtains the oral data of the user by gathering the brush head type, the tooth-brushing posture data and the tooth-brushing pressure data, wherein the oral data may be used to evaluate the tooth-brushing behavior information of the user in an all-around manner, including the tooth-brushing posture, the tooth-brushing pressure, etc.; as one of the preferred embodiments, in the control circuit 10 shown in FIG. 11, the motor driving module 1001 is connected to the main control module 101, and the motor driving module 1001 adjusts motor rotation parameters according to the control signal, wherein the motor rotation parameters include motor vibration frequency and motor vibration amplitude, and the rotation amplitude or rotation rate of the toothbrush may be changed just by adjusting the motor rotation parameters, wherein if it is obtained through the control signal that the tooth-brushing pressure is too large or the tooth-brushing amplitude is too large when the user brushes teeth, the motor driving module 1001 will automatically reduce the rotation amplitude and the rotation rate of the toothbrush according to the control signal, thus preventing splashing around of toothpaste foam or shortcomings that cause damage to the teeth in the tooth-brushing process of the user.

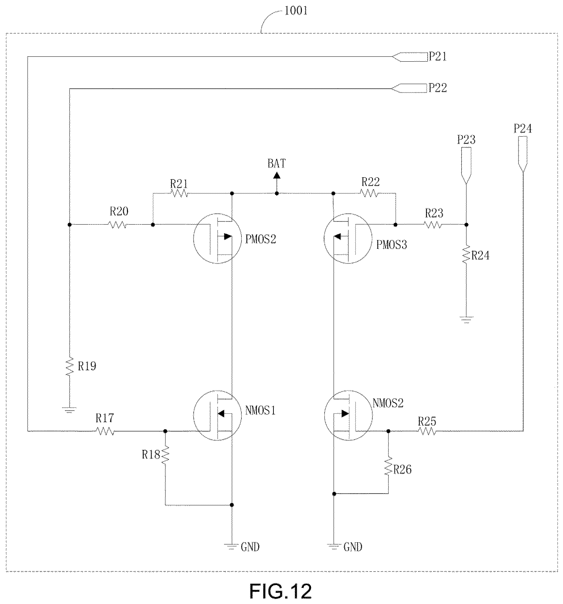

As an optional embodiment, FIG. 12 shows a circuit structure of the motor driving module 1001 provided in an embodiment of the present disclosure, and details thereof are as follows.

As shown in FIG. 12, the motor driving module 1001 includes: a seventeenth resistor R17, an eighteenth resistor R18, a nineteenth resistor R19, a twentieth resistor R20, a twenty-first resistor R21, a twenty-second resistor R22, a twenty-third resistor R23, a twenty-fourth resistor R24, a twenty-fifth resistor R25, a twenty-sixth resistor R26, a second PMOS transistor PMOS2, a third PMOS transistor PMOS3, a first NMOS transistor NMOS1 and a second NMOS transistor NMOS2.

In the above, a first end of the seventeenth resistor R17, a first end of the nineteenth resistor R19, a first end of the twentieth resistor R20, a first end of the twenty-third resistor R23, a first end of the twenty-fourth resistor R24 and a first end of the twenty-fifth resistor R25 are collectively connected to the main control module 101, for accessing the control signal; a second end of the seventeenth resistor R17 and a first end of the eighteenth resistor R18 are collectively connected to a gate electrode of the first NMOS transistor NMOS1, a second end of the eighteenth resistor R18 and a source electrode of the first NMOS transistor NMOS1 are collectively connected to the ground GND, a drain electrode of the first NMOS transistor NMOS1 is connected to a drain electrode of the second PMOS transistor PMOS2, a second end of the nineteenth resistor R19 is connected to the ground, a second end of the twentieth resistor R20 and a first end of the twenty-first resistor R21 are collectively connected to a gate electrode of the second PMOS transistor PMOS2, a second end of the twenty-first resistor R21, a source electrode of the second PMOS transistor PMOS2, a source electrode of the third PMOS transistor PMOS3 and a first end of the twenty-second resistor R22 are collectively connected to the main control module 101, for accessing the power supply signal BAT, wherein the power supply signal BAT is configured to supply electrical power to the motor driving module 1001; a second end of the twenty-second resistor R22 and a second end of the twenty-third resistor R23 are collectively connected to a gate electrode of the third PMOS transistor PMOS3, a second end of the twenty-fourth resistor R24 is connected to the ground GND, a drain electrode of the third PMOS transistor PMOS3 is connected to a drain electrode of the second NMOS transistor NMOS2, a second end of the twenty-fifth resistor R25 and a first end of the twenty-sixth resistor R26 are collectively connected to a gate electrode of the second NMOS transistor NMOS2, and a second end of the twenty-sixth resistor R26 and a source electrode of the second NMOS transistor NMOS2 are collectively connected to the ground GND.

It should be noted that, according to the circuit structure of the motor driving module 1001 in FIG. 12, when the main control module 101 transmits the control signal to the motor driving module 1001, as the motor driving module 1001 includes a plurality of NMOS transistors and PMOS transistors, an average running current or an average running voltage in the motor driving module 1001 may be changed just by controlling on and off of the NMOS transistors and the PMOS transistors according to the control signal, so that the motor rotation parameters can be adjusted, and the rotation amplitude and the rotation rate of the toothbrush can be reduced or increased.

The indicator lamp module 1002 is connected to the main control module 101, the indicator lamp module 1002 obtains an indicator lamp alarm signal according to the control signal, and light alarm prompt information can be sent to the user through the indicator lamp alarm signal, so as to prompt the user to reduce the tooth-brushing pressure or increase the tooth-brushing pressure in the tooth-brushing process. The speaker module 1003 is connected to the main control module 101, the speaker module 1003 obtains an audio alarm signal according to the control signal, and audio alarm prompt information of tooth-brushing pressure can be sent to the user through the audio alarm signal; therefore, in combination with the indicator lamp module 1002 and the speaker module 1003, if the tooth-brushing pressure is in an abnormal range when the user brushes teeth, the prompt information can be sent to the user simultaneously through the indicator lamp alarm signal and the audio alarm signal, ensuring that the user can be always in the most appropriate tooth-brushing pressure range when brushing teeth, thereby protecting the health of teeth.

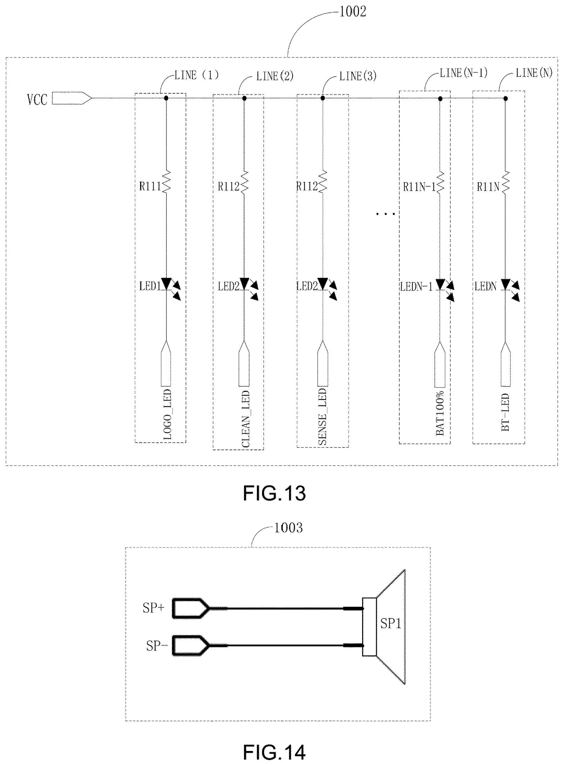

As an optional embodiment, FIG. 13 shows a circuit structure of the indicator lamp module 1002 provided in an embodiment of the present disclosure, and details thereof are as follows.

As shown in FIG. 13, the indicator lamp module 1002 includes N LED arrays LINE(1), LINE(2)... LINE(N-1), and LINE(N), wherein N is a positive integer greater than 1; each LED includes a resistor R11 i and a light emitting diode LEDi, wherein i is an arbitrary positive integer between 1 and N, one end of the resistor R11i is connected to a common terminal of the indicator lamp module 1002, the other end of the resistor R11 i is connected to an anode of the light emitting diode LEDi, and a cathode of the light emitting diode LEDi is connected to the main control module 101.

According to the circuit structure of the indicator lamp module 1002 shown in FIG. 13, the common terminal of the indicator lamp module 1002 is connected to the main control module 101, for accessing the voltage stabilizing signal VCC, and the light emitting diode LEDi in the indicator lamp module 1002 can be driven by the voltage stabilizing signal VCC, to operate normally, wherein the cathode of the light emitting diode LEDi is connected to the main control module 101, for accessing the control signal, and the light emitting brightness and the light color of each light emitting diode LED in the indicator lamp module 1002 are controlled by the control signal, so that light prompt information is sent to the user based on the light emitting brightness and the light color of the light emitting diode LED.

As an optional embodiment, FIG. 14 shows a circuit structure of the speaker module 1003 provided in an embodiment of the present disclosure, and details thereof are as follows.

As shown in FIG. 14, the speaker module 1003 includes an amplifying device SP1 connected to the main control module 101, wherein the amplifying device is a speaker, a horn or the like, wherein input ends SP+ and SP- of the amplifying device SP1 are connected to the main control module 101, for accessing the control signal; when the main control module 101 obtains that the tooth-brushing pressure of the user exceeds the normal range according to the tooth-brushing pressure data, the amplifying device SP1 sends the audio alarm signal to the user in time according to the control signal, so as to prompt the user to appropriately adjust the tooth-brushing pressure.

As an extensible embodiment, when the speaker module 1003 is connected to the main control module 101, the speaker module 1003 further may be used for sending a voice reminder for other functions, for example, power-on, posture errors such as transverse brushing, brush head change and insufficient power.

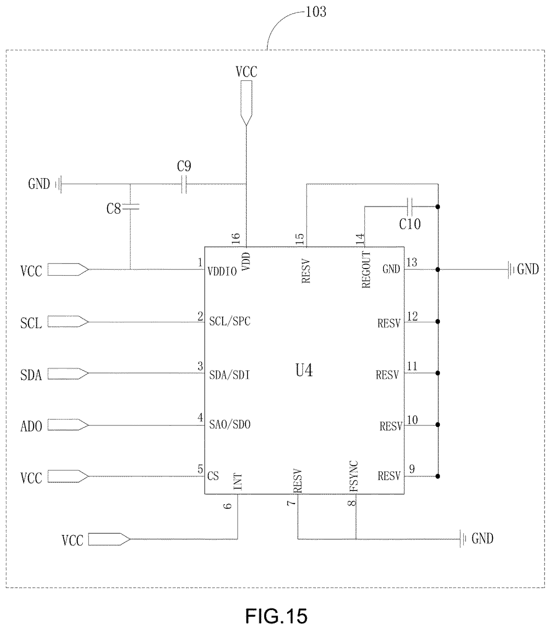

As an optional embodiment, FIG. 15 shows the circuit structure of the position detection module 103 provided in an embodiment of the present disclosure, and details thereof are as follows.

As shown in FIG. 15, the position detection module 103 includes: an acceleration sensor, an eighth capacitor C8, a ninth capacitor C9 and a tenth capacitor C10, wherein the acceleration sensor adopts an acceleration sensor chip U4 to realize corresponding functions, and serial communication pins SCL/SPC, SDA/SDI and SAO/SDO of the acceleration sensor chip U4 are connected to the main control module 101, for transmitting the tooth-brushing posture data to the main control module 101, and receiving a control signal generated by the control module 101; power supply pins VDDIO, CS and INT of the acceleration sensor chip U4 are connected to the main control module 101, for accessing the voltage stabilizing signal VCC, and a stable direct current power supply can be output to the position detection module 103 through the voltage stabilizing signal VCC; a grounding pin of the acceleration sensor chip U4 is connected to the ground GND, a first end of the eighth capacitor C8 and a first end of the ninth capacitor C9 are collectively connected to the ground GND, a second end of the eighth capacitor C8 is connected to the serial communication pin VDDIO of the acceleration sensor chip U4, a second end of the ninth capacitor C9 is connected to the power supply pin VDD of the acceleration sensor chip U4, and a power supply driving pin REGOUT of the acceleration sensor chip U4 is connected to the ground GND through the tenth capacitor C10.

Optionally, the acceleration sensor chip U4 is an ICM-20602 series chip.

In combination with the above circuit structure of the position detection module 103 shown in FIG. 15, the position detection module 103 obtains the tooth-brushing posture data by detecting the user's tooth-brushing posture in real time, and when the main control module 101 uploads the tooth-brushing posture data to the cloud server 30, the tooth-brushing posture data is processed and analyzed based on the big data analysis algorithms, so as to evaluate the historical tooth-brushing posture situation of the user; meanwhile, the main control module 101 generates the control signal in real time according to the user's tooth-brushing posture data, and after the smart terminal 20 receives the control signal, the user's tooth-brushing position may be displaced in the APP in the smart terminal 20, and the tooth-brushing position guidance and prompt information can be sent to the user.

As an optional embodiment, in the above circuit structure of the position detection module 103, the acceleration sensor is a three-axis acceleration sensor, a six-axis acceleration sensor or a nine-axis acceleration sensor, and if the oral cavity of the user is divided into six regions, different tooth-brushing posture results of the toothbrush in the oral cavity of the user may be detected just using different types of acceleration sensors.

For example, if the acceleration sensor is a three-axis acceleration sensor, the position detection module 103 realizes blind brushing position detection for 16 faces of 6 regions of the user's oral cavity through the three-axis acceleration sensor, and as the main control module 101 transmits the detection result to the smart terminal 20, the user synchronously views the tooth-brushing position guidance through the APP installed on the smart terminal 20 in the tooth-brushing process, so as to correct bad tooth-brushing behaviors and habits; further, the control module 101 uploads the tooth-brushing posture data to the cloud server 30, and the historical tooth-brushing statistic result of the 16 faces of 6 regions can be provided to the user through the cloud big data analysis algorithms.

For example, if the acceleration sensor is a six-axis acceleration sensor, the position detection module 103 realizes blind brushing position detection for the 16 faces of 6 regions of the user's oral cavity through the three-axis acceleration sensor plus a three-axis gyro sensor; if the acceleration sensor is a nine-axis acceleration sensor, the position detection module 103 realizes the blind brushing position detection for the 16 faces of 6 regions of the user's oral cavity through the three-axis acceleration sensor plus the three-axis gyro sensor plus a three-axis geomagnetic sensor; compared with the above three-axis acceleration sensor, when the acceleration sensor at this time is a six-axis acceleration sensor or a nine-axis acceleration sensor, the control circuit 10 not only can perform synchronous smart guidance and analysis on the user according to the tooth-brushing posture data in the daily life, but also can ensure, through the six-axis acceleration sensor or the nine-axis acceleration sensor, that the detection result of the user's tooth-brushing posture data by the position detection module 103 will not be affected no matter the user brushes teeth with a left hand or a right hand, thus, the position detection module 103 has very high accuracy in detecting the user's tooth-brushing posture, improving the real-time performance of the control circuit 10 for guiding the user's tooth-brushing posture.

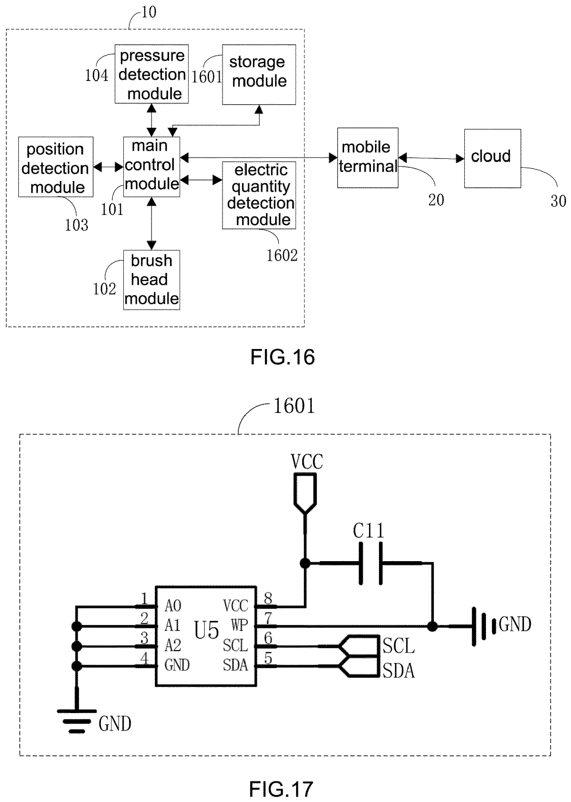

FIG. 16 shows another modular structure of the control circuit 10 of the smart toothbrush provided in an embodiment of the present disclosure, and compared with the control circuit 10 of the smart toothbrush shown in FIG. 1, the control circuit 10 shown in FIG. 16 further includes: a storage module 1601 and an electric quantity detection module 1602, and details thereof are as follows.

In the above, the storage module 1601 is connected to the main control module 101, the storage module 1601 can store the oral data according to the control signal, and as a large amount of tooth-brushing data will be generated during the tooth-brushing process of the user, including the brush head type, the tooth-brushing posture data, the tooth-brushing pressure data and so on, when the main control module 101 gathers the above data to obtain the oral data, the oral data of the user is stored by the storage module so as to record the historical tooth-brushing data of the user, the historical oral data of the user is analyzed and mined in depth by a cloud smart data processing algorithms in the cloud server 30, in turn, the change situation of the tooth-brushing behavior of the user can be evaluated more accurately.

The electric quantity detection module 1602 is connected to the main control module 101, the electric quantity detection module 1602 detects the electric quantity of the main control module 101 according to the control signal and obtains an electric quantity detection signal, and the remaining electric quantity of the main control module 101 can be detected in real time just through the electric quantity detection signal, so as to ensure that the control circuit 10 can obtain continuous and stable electrical power.

As an optional embodiment, FIG. 17 shows a circuit structure of the storage module 1601 provided in an embodiment of the present disclosure, and details thereof are as follows.

As shown in FIG. 17, the storage module 1601 includes: a storage chip U5 and an eleventh capacitor C11, a grounding pin of the storage chip U5 is connected to the ground GND, serial communication pins SCL and SDA of the storage chip are connected to the main control module 101, for accessing the oral data and the control signal; a power supply pin VCC of the storage chip U5 is connected to the main control module 101, for accessing the voltage stabilizing signal VCC; the eleventh capacitor C11 is connected between the power supply pin VCC of the storage chip U5 and the ground GND; in turn, the function of storing the oral data can be realized just by the storage chip U5.

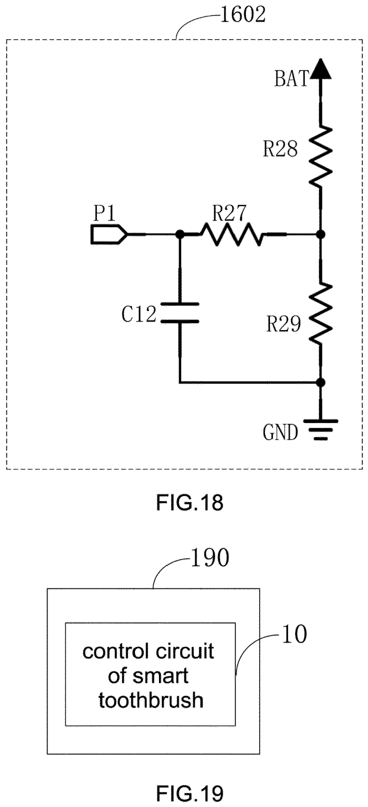

As an optional embodiment, FIG. 18 shows the circuit structure of the electric quantity detection module 1602 provided in an embodiment of the present disclosure, and details thereof are as follows.

As shown in FIG. 18, the electric quantity detection module 1602 includes: a twelfth capacitor C12, a twenty-seventh resistor R27, a twenty-eighth resistor R28 and a twenty-ninth resistor R29, wherein a first end of the twelfth capacitor C12 and a first end of the twenty-seventh resistor R27 are collectively connected to the main control module 101, for accessing the control signal and the power supply signal BAT, a second end of the twelfth capacitor C12 and a first end of the twenty-ninth resistor R29 are collectively connected to the ground GND, a second end of the twenty-seven resistor R27 and a second end of the twenty-ninth resistor R29 are collectively connected to a first end of the twenty-eighth resistor R28, a second end of the twenty-eighth resistor R28 is connected to the main control module 101, for transmitting an electric quantity detection signal to the main control module 101; therefore, the electric quantity detection module 1602 detects to obtain the electric quantity detection signal through the accessed power supply signal BAT, and can implement electric quantity monitoring on the main control module 101 just through the electric quantity detection signal, ensuring normal operation of the control circuit 10.

Through the embodiments of the present disclosure, the control circuit 10 of the above smart toothbrush has two processing manners for data collected by various function modules at the same time: 1. the main control module 101 uploads the oral data of the user to the cloud server 30, as the oral data includes the tooth-brushing data generated by the user in the process of daily tooth-brushing, after the big data processing and analysis is performed on the oral data in the cloud server 30, daily tooth-brushing information of the user and the change situation of the dental health of the user can be monitored in real time, enhancing the real intelligent experience of the user; 2. the main control module 101 generates the control signal according to the oral data of the user, wherein the control signal includes all-around tooth-brushing behavior information of the user, and in the process of tooth-brushing of the user, the brush head module 102, the position detection module 103, the pressure detection module 104, the motor driving module 1001, the indicator lamp module 1002 and so on send the tooth-brushing behavior guidance and prompt and correction information to the user in synchronization according to the control signal, thus realizing classification detection of the brush head type, tooth-brushing posture data and tooth-brushing pressure data, and monitoring the tooth-brushing behavior of the user in real time; meanwhile, according to the control signal, the smart terminal 20 may display the tooth-brushing behavior of the user in real time, and the user may intuitively know his/her own tooth-brushing dynamic information and oral health state, in turn, the user can always keep the optimal tooth-brushing state, which fully protects the oral health of the user, thus effectively solving the problem in the prior art that the control circuit of the smart toothbrush cannot perform big data analysis and processing on the user's tooth-brushing data, which causes that the user's oral health cannot be protected in time.

FIG. 19 shows a modular structure of a smart toothbrush 190 provided in an embodiment of the present disclosure, wherein the smart toothbrush 190 includes the control circuit 10 as described above, and as shown previously, the control circuit 10 can monitor the tooth-brushing behavior of the user in real time and send the tooth-brushing behavior guidance information, thus when the user uses the smart toothbrush 190 to brush teeth, a good real intelligent experience can be provided to the user.

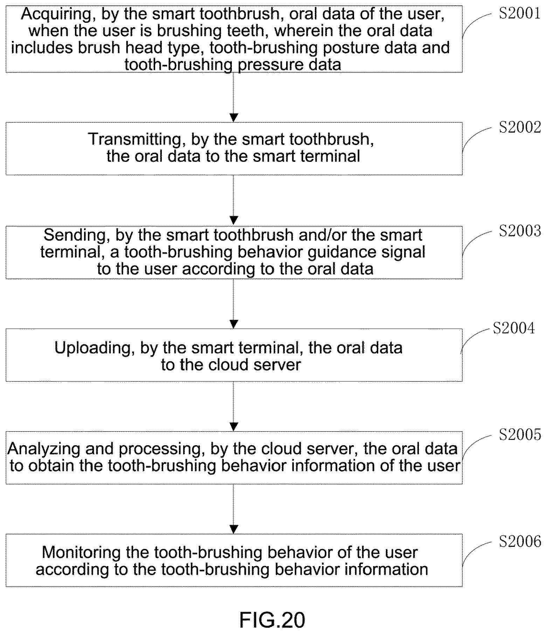

FIG. 20 shows an implementing flow of a smart monitoring method of tooth-brushing behavior provided in an embodiment of the present disclosure, wherein the smart monitoring method can be applied to the above smart toothbrush 190, and the smart terminal 20 and the cloud server 30 connected to each other through network, and specific steps of the smart monitoring method are described below in combination with FIG. 1 - FIG. 20, as shown in the following:
Step S2001: acquiring, by the smart toothbrush 190, oral data of the user, when the user is brushing teeth, wherein the oral data includes brush head type, tooth-brushing posture data and tooth-brushing pressure data.

Specifically, as the control circuit 10 of the above smart toothbrush includes the brush head module 102, the position detection module 103 and the pressure detection module 104, the smart toothbrush 190 may acquire the oral data of the user in real time, wherein the oral data includes different types of tooth-brushing data generated by the user in the tooth-brushing process.

Step S2002: transmitting, by the smart toothbrush 190, the oral data to the smart terminal 20.

Step S2003: sending, by the smart toothbrush 190 and/or the smart terminal 20, a tooth-brushing behavior guidance signal to the user according to the oral data.

As the oral data includes all data detected by the user in the process of brushing teeth using the smart toothbrush, the smart toothbrush 190 and/or the smart terminal 20 can obtain the tooth-brushing behavior information and the oral health state of the user after processing the oral data, therefore, the smart toothbrush 190 and/or the smart terminal 20 can send the tooth-brushing behavior guidance signal to the user according to the oral data, and the tooth-brushing behavior of the user can be guided in real time through the tooth-brushing behavior guidance signal, so that the oral health of the user is protected in an all-around manner.

Step S2004: uploading, by the smart terminal 20, the oral data to the cloud server 30.

Specifically, the smart toothbrush 190 and the smart terminal 20 may communicate with each other through wireless bluetooth, so that the smart toothbrush 190 may transmit the oral data to the smart terminal 20 through wireless bluetooth; similarly, the smart terminal 20 and the cloud server 30 may perform wireless bluetooth bidirectional signal transmission, that is, the smart terminal 20 may upload the oral data to the cloud server 30 through wireless bluetooth.

Step S2005: analyzing and processing, by the cloud server 30, the oral data to obtain the tooth-brushing behavior information of the user. The tooth-brushing behavior information may be tooth-brushing behavior information including the current oral health condition, tooth-brushing behavior and habit, etc. of the user, or tooth-brushing behavior information obtained according to the current tooth-brushing behavior information, oral health condition, and (bad) tooth-brushing behavior and habit corrected of the user.

Step S2006: monitoring the tooth-brushing behavior of the user according to the tooth-brushing behavior information.

Specifically, the cloud server 30 stores a data processing and analysis algorithms in advance, at this time, the cloud server 30, as a big data platform, receives the oral data transmitted by the smart terminal 20, and analyzes and processes the oral data according to the data processing and analysis algorithms to obtain the tooth-brushing behavior information of the user, and the historical tooth-brushing actions and the oral health condition of the user can be reflected by the tooth-brushing behavior information; through the tooth-brushing behavior information, the historical tooth-brushing information of the user can be recorded, the tooth-brushing health condition of the user can be evaluated, and the future oral health condition of the user also can be predicted through the tooth-brushing behavior information, so as to smartly monitor the tooth-brushing behavior of the user comprehensively.

It should be noted that, in the implementation flow of the smart monitoring method, there is no order relationship between Step S2003 and Step S2006, that is, step S2003 may be prior to Step S2006 or after Step S2006.

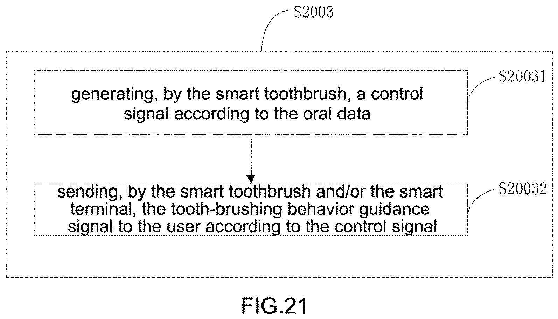

FIG. 21 shows a specific operation method of Step S2003 in the implementation flow of the above smart monitoring method, as shown in the following:
Step S20031: generating, by the smart toothbrush 190, a control signal according to the oral data.

Step S20032: sending, by the smart toothbrush 190 and/or the smart terminal 20, a tooth-brushing behavior guidance signal to the user according to the control signal.

Specifically, as the oral data includes all the tooth-brushing data generated by the user in the tooth-brushing process, the smart toothbrush 190 generates the control signal according to the oral data of the user, and the tooth-brushing behavior information of the user can be comprehensively evaluated just through the control signal; after the smart toothbrush 190 generates the control signal according to the oral data of the user, on the one hand, various function modules in the smart toothbrush 190 send a tooth-brushing behavior guidance signal to the user, respectively, based on the control signal, for example, tooth-brushing pressure guidance information, tooth-brushing posture guidance information, etc., and through the tooth-brushing behavior guidance signal sent by the smart toothbrush, the tooth-brushing behavior of the user can be corrected and the tooth-brushing prompt information can be sent to the user simultaneously; on the other hand, when the smart toothbrush 190 transmits the control signal to the smart terminal 20, the smart terminal 20 may send the tooth-brushing behavior guidance signal to the user according to the control signal, that is, the APP installed on the smart terminal 20 may dynamically display the user's tooth-brushing behavior and oral health condition based on the control signal, so that the user can more intuitively know his/her own tooth-brushing behavior state in an all-around manner, and thus the user is ensured to be always in the optimal tooth-brushing state.

Through the embodiments of the present disclosure, in the above smart monitoring method of tooth-brushing behavior, after obtaining the oral data of the user in real time through the smart toothbrush 190, on the one hand, the smart toothbrush 190 uploads the oral data to the cloud server 30 through the smart terminal 20, as the data processing and analysis algorithms are stored in advance in the cloud server 30, after analyzing and processing the oral data based on the data processing and analysis algorithms, the user's tooth-brushing behavior information is obtained, and the tooth-brushing behavior information may be used to evaluate the tooth-brushing action and the oral health condition of the user; on the other hand, the smart terminal 20 and/or the smart toothbrush 190 send the tooth-brushing behavior guidance signal to the user according to the oral data, which can synchronously send the tooth-brushing behavior guidance and prompt information to the user in the process of tooth-brushing of the user based on the tooth-brushing behavior guidance signal, so as to correct the tooth-brushing behavior of the user; meanwhile, the user further may intuitively know his/her own tooth-brushing behavior and oral health condition through the smart terminal 20, so that the in-depth analysis and processing on the oral data of the user is realized by the above smart monitoring method of the tooth-brushing behavior, and the tooth-brushing behavior guidance and prompt information is sent to the user in real time based on the oral data, thereby greatly improving the intelligent experience of the user; then the problems in the prior art that in-depth processing and analysis on the tooth-brushing data is lacked and that the intelligent experience of the user is extremely low are effectively solved.

It should be indicated that in the present text, relational terms such as first and second are merely for distinguishing one entity from another entity, while it is not required or implied that these entities necessarily have any such practical relation or order. Moreover, terms "including", "containing" or any other derivatives are intended to be non-exclusive, so that all elements inherent to a product or a structure including a series of elements are included. Without more restrictions, an element defined with wordings "including..." or "containing..." does not exclude presence of other elements in the process, method, article or terminal device including said element. In addition, in the present text, "more than", "less than", "exceed" and the like shall be construed as not including the number itself; "no less than", "no more than", "within" and the like shall be construed as including the number itself.

The above-mentioned are merely preferred embodiments of the present disclosure, rather than limiting the present disclosure, any amendments, equivalent replacements improvements and so on, within the spirit and principle of the present disclosure, should be covered within the scope of protection of the present disclosure.

## Claims

1. A control circuit of a smart toothbrush, **characterized by** comprising:
a main control module, connected to a cloud server through a smart terminal, and configured to obtain oral data of a user by gathering a brush head type, tooth-brushing posture data and tooth-brushing pressure data, upload the oral data to the cloud server through the smart terminal and generate a control signal according to the oral data;
a brush head module, connected to the main control module, and configured to detect a type characteristic of a brush head selected by the user to obtain the brush head type and obtain a brush head indication signal according to the control signal;
a position detection module, connected to the main control module, and configured to detect a tooth-brushing posture of the user to obtain the tooth-brushing posture data and obtain a tooth-brushing posture guide signal according to the control signal; and
a pressure detection module, connected to the main control module, and configured to detect a tooth-brushing pressure of the user to obtain the tooth-brushing pressure data and obtain a pressure detection signal according to the control signal.

2. The control circuit according to claim 1, wherein the main control module comprises:
a charging unit, configured to access a power supply signal;
a voltage stabilizing unit, connected to the charging unit, and configured to obtain a voltage stabilizing signal according to the power supply signal;
a main control unit, connected to the charging unit and the voltage stabilizing unit, and configured to obtain the oral data of the user by gathering the brush head type, the tooth-brushing posture data and the tooth-brushing pressure data and generate the control signal according to the oral data; and
a communication unit, connected between the main control unit and the cloud server, and configured to upload the oral data to the cloud server through the smart terminal.

3. The control circuit according to claim 2, wherein the charging unit comprises: a first inductor, a first capacitor, a second capacitor, a third capacitor, a fourth capacitor, a fifth capacitor, a first diode, a second diode, a third diode, a fourth diode, a fifth diode, a sixth diode, a first resistor, a second resistor, a third resistor, a fourth resistor, a fifth resistor, a sixth resistor, a seventh resistor, a first PMOS transistor, a first NPN-type triode, a battery and a fuse,
wherein a first end of the first inductor, a first end of the first capacitor, a first end of the second capacitor and a cathode of the second diode are collectively connected to an anode of the first diode, a second end of the first inductor, a second end of the first capacitor, a second end of the second capacitor and a cathode of the third diode are collectively connected to an anode of the fourth diode, an anode of the second diode and an anode of the third diode are collectively connected to the ground, a cathode of the first diode, an anode of the fifth diode, a cathode of the fourth diode and an anode of the sixth diode are collectively connected to a first end of the sixth resistor, a second end of the sixth resistor, a first end of the fourth capacitor, a first end of the fifth capacitor and a first end of the seventh resistor are collectively connected to the main control unit, a second end of the fourth capacitor, a second end of the fifth capacitor and a second end of the seventh resistor are collectively connected to the ground, a cathode of the sixth diode is connected to a first end of the fifth resistor, a cathode of the fifth diode and a first end of the first resistor are collectively connected to a source electrode of the first PMOS transistor, a first end of the second resistor is connected to a gate electrode of the first PMOS transistor, a second end of the first resistor and a second end of the second resistor are collectively connected to a collector of the first NPN-type triode, an emitter of the first NPN-type triode is connected to the ground, a drain electrode of the first PMOS transistor, a first end of the third capacitor, a first end of the fuse and a first end of the third resistor are collectively connected to the main control unit, a second end of the third resistor is connected to the voltage stabilizing unit, a second end of the fuse is connected to a positive electrode of the battery, a negative electrode of the battery is connected to the ground, a second end of the third capacitor is connected to the ground, a base of the first NPN-type triode is connected to a first end of the fourth resistor, and a second end of the fourth resistor and a second end of the fifth resistor are collectively connected to the main control unit.

4. The control circuit according to claim 2, wherein the voltage stabilizing unit comprises: a seventh diode, a sixth capacitor, a seventh capacitor and a voltage stabilizing chip,
wherein a cathode of the seventh diode and a power supply signal input pin of the voltage stabilizing chip are collectively connected to the charging unit, a voltage stabilizing signal output pin of the voltage stabilizing chip, a first end of the sixth capacitor and a first end of the seventh capacitor are collectively connected to the main control unit, a second end of the seventh capacitor is connected to the ground, a second end of the sixth capacitor, a grounding pin of the voltage stabilizing chip and an anode of the seventh diode are collectively connected to the ground.

5. The control circuit according to claim 2, wherein the main control unit comprises a main control chip,
wherein a power supply pin of the main control chip is connected to the voltage stabilizing unit, a power supply control pin of the main control chip is connected to the charging unit, and a communication pin of the main control chip is connected to the communication unit.

6. The control circuit according to claim 1, wherein the brush head module comprises a processing chip,
wherein a serial communication pin of the processing chip is connected to the main control module.

7. The control circuit according to claim 1, wherein the pressure detection module comprises: an eighth resistor, a ninth resistor, a tenth resistor, an eleventh resistor, a twelfth resistor, a thirteenth resistor, a fourteenth resistor, a fifteenth resistor, a sixteenth resistor and an operational amplifier,
wherein a first end of the eighth resistor and a first end of the ninth resistor are collectively connected to the ground, a second end of the ninth resistor and a first end of the tenth resistor are collectively connected to a non-inverting input terminal of the operational amplifier, a second end of the ninth resistor, a first end of the eleventh resistor and a first end of the twelfth resistor are collectively connected to an inverting input terminal of the operational amplifier, a second end of the tenth resistor, a second end of the eleventh resistor and a first end of the thirteenth resistor are collectively connected to the main control module, a second end of the twelfth resistor and a second end of the thirteenth resistor are collectively connected to a first end of the fourteenth resistor, a second end of the fourteenth resistor is connected to the ground, a first end of the fifteenth resistor and a first end of the sixteenth resistor are collectively connected to the inverting input terminal of the operational amplifier, a second end of the fifteenth resistor is connected to the ground, and a second end of the sixteenth resistor and an output terminal of the operational amplifier are collectively connected to the main control module.

8. The control circuit according to claim 1, further comprising:
a motor driving module, connected to the main control module, and configured to adjust motor rotation parameters according to the control signal.

9. The control circuit according to claim 8, wherein the motor driving module comprises: a seventeenth resistor, an eighteenth resistor, a nineteenth resistor, a twentieth resistor, a twenty-first resistor, a twenty-second resistor, a twenty-third resistor, a twenty-fourth resistor, a twenty-fifth resistor, a twenty-sixth resistor, a second PMOS transistor, a third PMOS transistor, a first NMOS transistor and a second NMOS transistor,
wherein a first end of the seventeenth resistor, a first end of the nineteenth resistor, a first end of the twentieth resistor, a first end of the twenty-third resistor, a first end of the twenty-fourth resistor and a first end of the twenty-fifth resistor are collectively connected to the main control module, a second end of the seventeenth resistor and a first end of the eighteenth resistor are collectively connected to a gate electrode of the first NMOS transistor, a second end of the eighteenth resistor and a source electrode of the first NMOS transistor are collectively connected to the ground, a drain electrode of the first NMOS transistor is connected to a drain electrode of the second PMOS transistor, a second end of the nineteenth resistor is connected to the ground, a second end of the twentieth resistor and a first end of the twenty-first resistor are collectively connected to a gate electrode of the second PMOS transistor, a second end of the twenty-first resistor, a source electrode of the second PMOS transistor, a source electrode of the third PMOS transistor and a first end of the twenty-second resistor are collectively connected to the main control module, a second end of the twenty-second resistor and a second end of the twenty-third resistor are collectively connected to a gate electrode of the third PMOS transistor, a second end of the twenty-fourth resistor is connected to the ground, a drain electrode of the third PMOS transistor is connected to a drain electrode of the second NMOS transistor, a second end of the twenty-fifth resistor and a first end of the twenty-sixth resistor are collectively connected to a gate electrode of the second NMOS transistor, and a second end of the twenty-sixth resistor and a source electrode of the second NMOS transistor are collectively connected to the ground.

10. The control circuit according to claim 1, further comprising:
an indicator lamp module, connected to the main control module, and configured to obtain an indicator lamp alarm signal according to the control signal; and
a speaker module, connected to the main control module, and configured to obtain an audio alarm signal according to the control signal.

11. The control circuit according to claim 10, wherein the indicator lamp module comprises LED arrays in a number of N, wherein N is a positive integer greater than 1,
wherein each of LEDs comprises a resistor and a light emitting diode, wherein the resistor has one end connected to a common terminal of the indicator lamp module, and the other end connected to an anode of the light emitting diode, and a cathode of the light emitting diode is connected to the main control module.

12. The control circuit according to claim 1, wherein the position detection module comprises: an acceleration sensor, an eighth capacitor, a ninth capacitor and a tenth capacitor,
wherein the acceleration sensor comprises an acceleration sensor chip; a serial communication pin of the acceleration sensor chip is connected to the main control module, a power supply pin of the acceleration sensor chip is connected to the main control module, a grounding pin of the acceleration sensor chip is connected to the ground, a first end of the eighth capacitor and a first end of the ninth capacitor are collectively connected to the ground, a second end of the eighth capacitor is connected to the serial communication pin of the acceleration sensor chip, a second end of the ninth capacitor is connected to the power supply pin of the acceleration sensor chip, and a power supply driving pin of the acceleration sensor chip is connected to the ground through the tenth capacitor.

13. The control circuit according to claim 12, wherein the acceleration sensor is a three-axis acceleration sensor, a six-axis acceleration sensor or a nine-axis acceleration sensor.

14. The control circuit according to claim 1, further comprising:
a storage module, connected to the main control module, and configured to store the oral data according to the control signal; and
an electric quantity detection module, connected to the main control module, and configured to detect an electric quantity of the main control module according to the control signal and obtain an electric quantity detection signal.

15. The control circuit according to claim 14, wherein the storage module comprises: a storage chip and an eleventh capacitor, a grounding pin of the storage chip is connected to the ground, a serial communication pin of the storage chip is connected to the main control module, a power supply pin of the storage chip is connected to the main control module, and the eleventh capacitor is connected between the power supply pin of the storage chip and the ground.

16. The control circuit according to claim 14, wherein the electric quantity detection module comprises: a twelfth capacitor, a twenty-seventh resistor, a twenty-eighth resistor and a twenty-ninth resistor,
wherein a first end of the twelfth capacitor and a first end of the twenty-seventh resistor are collectively connected to the main control module, a second end of the twelfth capacitor and a first end of the twenty-ninth resistor are collectively connected to the ground, a second end of the twenty-seven resistor and a second end of the twenty-ninth resistor are collectively connected to a first end of the twenty-eighth resistor, and a second end of the twenty-eighth resistor is connected to the main control module.

17. A smart toothbrush, **characterized by** comprising the control circuit according to any one of claims 1-16.

18. A smart monitoring method of tooth-brushing behavior, **characterized by** comprising:
acquiring, by a smart toothbrush, oral data of a user, when the user is brushing teeth, wherein the oral data comprises brush head type, tooth-brushing posture data and tooth-brushing pressure data; transmitting, by the smart toothbrush, the oral data to a smart terminal;
sending, by the smart toothbrush and/or the smart terminal, a tooth-brushing behavior guidance signal to the user according to the oral data;
uploading, by the smart terminal, the oral data to the cloud server;
analyzing and processing, by the cloud server, the oral data to obtain tooth-brushing behavior information of the user; and
monitoring a tooth-brushing behavior of the user according to the tooth-brushing behavior information.

19. The smart monitoring method according to claim 18, wherein the sending, by the smart toothbrush and/or the smart terminal, a tooth-brushing behavior guidance signal to the user according to the oral data comprises,
generating, by the smart toothbrush, a control signal according to the oral data; and sending, by the smart toothbrush and/or the smart terminal, the tooth-brushing behavior guidance signal to the user according to the control signal.
